# EUROPEAN PATENT APPLICATION

(11) **EP 4 797 485 A1**
(43) Date of publication of application: **26.08.2026**
(21) Application number: 24866590.3
(22) Date of filing: 28.10.2024
(51) Int. Cl.: H02J 7/00, H04W 4/06

(54) **CHARGING SYSTEM AND BATTERY PACK**

(71) Applicant: Nanjing Chervon Industry Co., Ltd., Nanjing, Jiangsu 211106 (CN)
(72) Inventor: FANG, Xiong, Nanjing, Jiangsu 211106 (CN); XU, Zhiwei, Nanjing, Jiangsu 211106 (CN)
(74) Representative: Sun, Yiming
(86) International application number: PCT/CN2024/127583
(87) International publication number: WO 2026/090767

(57) **Abstract**

A charging system and a battery pack. The charging system includes: an electrical energy conversion apparatus and multiple electrical energy receiving apparatuses connected in cascade, where the charging system is configured to charge a battery pack electrically connected to an electrical energy receiving apparatus; and a communication module, where the charging system is configured to establish a communication connection and perform data interaction with an external device through the communication module. The communication module includes one or more communication submodules. A communication submodule is configured to broadcast out broadcast information carrying a data-to-be-transmitted identifier. The external device or another communication submodule is configured to, after scanning the broadcast information, actively establish a communication connection with the communication submodule broadcasting out, so as to acquire to-be-transmitted data of the communication submodule.

## Description

### BACKGROUND

Power tools, widely used in various scenarios such as gardens and decoration, are mostly powered through lithium batteries at present. A battery pack constituted by lithium cells can be detached from and mounted to various power tools. Battery packs are secondary batteries and can be repeatedly used through a cyclic charging and discharging process. Some power tools can share the same battery pack in different periods. Some power tools need to use battery packs different from each other. As the power of tools increases, some power tools need to use multiple battery packs simultaneously or require a battery pack to be replaced in a working process to extend a battery lifetime. Against the preceding background, a demand for charging multiple battery packs collectively in the same period or different periods has gradually emerged. Furthermore, this charging scenario has given rise to problems about data transmission and management control between various devices.

This part provides background information related to the present application, and the background information is not necessarily the existing art.

### SUMMARY

An object of the present application is to solve or at least alleviate part or all of the preceding problems. To this end, the present application provides a charging system and a battery pack.

The present application adopts the technical solutions described below.

A charging system includes: an electrical energy conversion apparatus and multiple electrical energy receiving apparatuses connected in cascade, where the charging system is configured to charge a battery pack electrically connected to an electrical energy receiving apparatus; and a communication module, where the charging system is configured to establish a communication connection and perform data interaction with an external device through the communication module. The communication module includes one or more communication submodules. A communication submodule is configured to broadcast out broadcast information carrying a data-to-be-transmitted identifier. The external device or another communication submodule is configured to, after scanning the broadcast information, actively establish a communication connection with the communication submodule broadcasting out, so as to acquire to-be-transmitted data of the communication submodule.

In some examples, the electrical energy conversion apparatus includes a power interface connecting an external power supply, a connecting port connecting the electrical energy receiving apparatus, and a conversion circuit connected between the power interface and the connecting port, and the electrical energy receiving apparatus includes an electrical energy input port connecting the electrical energy conversion apparatus or another electrical energy receiving apparatus or includes the electrical energy input port and an electrical energy output port connecting another energy receiving apparatus.

In some examples, the communication submodule includes a Bluetooth submodule as a data sender and/or a Bluetooth gateway submodule as a data receiver.

In some examples, the electrical energy conversion apparatus includes a charger, and the communication module includes a Bluetooth gateway submodule disposed in the charger.

In some examples, the electrical energy receiving apparatus includes an adapter, and the communication module includes a Bluetooth submodule disposed in the adapter.

In some examples, the communication module includes a Bluetooth submodule disposed in the battery pack.

In some examples, the Bluetooth gateway submodule is configured to periodically listen for and scan a broadcast message with a preset frequency.

In some examples, the communication submodule further includes a wireless fidelity (Wi-Fi) submodule or a cellular submodule, and the charging system is configured to perform the data interaction with the external device through the Wi-Fi submodule or the cellular submodule.

In some examples, the external device includes a cloud server.

In some examples, the charging system is configured to adjust the frequency of the data interaction with the external device based on the working state of at least one of the electrical energy conversion apparatus, the electrical energy receiving apparatus, and the battery pack.

In some examples, the communication module forms a wireless communication link in the charging system and/or between the charging system and the external device, the communication module includes a storage unit, data untransmitted at present is retained in the storage unit when the wireless communication link is interrupted, and the communication module is configured to, after the wireless communication link is restored, continue the data transmission uncompleted before the link interruption.

In some examples, the communication module forms a wired communication link and a wireless communication link in the charging system and/or between the charging system and the external device, and the communication module is configured to perform data transmission through the wired communication link and the wireless communication link simultaneously.

A charging system includes: an electrical energy conversion apparatus and multiple electrical energy receiving apparatuses connected in cascade, where the charging system is configured to charge battery packs electrically connected to the multiple electrical energy receiving apparatuses; and a communication module, where the charging system is configured to establish a communication connection and perform data interaction with an external device through the communication module. The communication module includes one or more communication submodules. A communication submodule as a data sender has a broadcast state and a connected state. The communication submodule broadcasts out, in the broadcast state, broadcast information carrying a data-to-be-transmitted identifier and performs data transmission in the connected state. The external device or another communication submodule as a data receiver actively establishes a communication connection with the communication submodule in the broadcast state after scanning the broadcast information so that the communication submodule enters the connected state.

A charging system includes an electrical energy conversion apparatus and multiple electrical energy receiving apparatuses connected in cascade. The charging system is configured to charge a battery pack electrically connected to an electrical energy receiving apparatus. One or more of the electrical energy conversion apparatus, the electrical energy receiving apparatus, and the battery pack are provided with a communication module. A communication submodule constitutes a communication subsystem of the charging system, and the communication subsystem is configured to perform data interaction in the subsystem and/or between the subsystem and an external device.

In some examples, the communication submodule as the data sender is configured to return to the broadcast state after the transmission of to-be-transmitted data is completed in the connected state or after the duration for which no response is received from the data receiver in the connected state exceeds a preset duration threshold.

A battery pack includes: a battery pack housing; a cell unit accommodated in the battery pack housing; a terminal assembly configured to be coupled to a power tool or an adapter so as to transmit electrical energy; and a communication module configured to establish a communication connection and perform data interaction with an external device. The communication module is further configured to broadcast out broadcast information carrying a data-to-be-transmitted identifier so that the external device actively establishes the communication connection and performs the data interaction with the communication module after scanning the broadcast information.

In some examples, the power tool includes a handheld power tool and a riding vehicle.

A charging system includes: an electrical energy conversion apparatus and multiple electrical energy receiving apparatuses connected in cascade, where the charging system is configured to charge a battery pack electrically connected to an electrical energy receiving apparatus; and a communication module, where the charging system is configured to establish a communication connection and perform data interaction with an external device through the communication module. The charging system is further configured to adjust the frequency of the data interaction with the external device based on the working state of at least one of the electrical energy conversion apparatus, the electrical energy receiving apparatus, and the battery pack.

In some examples, the charging system is configured to adjust the frequency of the data interaction based on the idle duration for which the electrical energy conversion apparatus continuously remains in an idle state.

In some examples, the working state includes an emergency, and the charging system is configured to perform the data interaction with the external device when the emergency occurs, where the emergency includes the event where the battery pack is inserted or removed and/or a fault alarm.

In some examples, the charging system is further configured to adjust the frequency of the data interaction with the external device based on an instruction from the external device.

In some examples, the communication module includes a storage unit, and the communication module is configured to, when communication with the external device is interrupted, store fault information in the storage unit and is configured to, after the communication is restored, transmit the fault information to the external device.

In some examples, the communication module forms a wired communication link and a wireless communication link in the charging system and/or between the charging system and the external device, and the communication module is configured to perform data transmission through the wired communication link and the wireless communication link simultaneously.

In some examples, the communication module includes one or more of a Bluetooth submodule, a Bluetooth gateway submodule, a Wi-Fi submodule, and a cellular submodule, and the charging system is configured to perform the data interaction with the external device through the Wi-Fi submodule or the cellular submodule.

In some examples, the electrical energy conversion apparatus, the electrical energy receiving apparatus, and the battery pack each perform the data interaction with the external device with at least partially different frequencies.

In some examples, the communication module also forms a wired communication link in the charging system and/or between the charging system and the external device. The electrical energy conversion apparatus, the electrical energy receiving apparatus, and the battery pack each perform the data interaction through the wired communication link with the same frequency.

A charging combination includes an adapter and a battery pack electrically connected to the adapter detachably. The adapter includes: an adapter housing; an electrical energy input port configured to access electrical energy to charge the battery pack; and at least one coupling portion for electrically connecting the battery pack detachably. The charging combination further includes a communication module. The charging combination is configured to establish a communication connection and perform data interaction with an external device through the communication module. The charging combination is further configured to adjust the frequency of the data interaction with the external device or an electrical energy conversion apparatus based on the working state of the adapter and/or the battery pack.

In some examples, the communication module includes a Bluetooth submodule disposed in each of at least part of battery packs and/or each of at least part of adapters.

In some examples, the external device or the electrical energy conversion apparatus is provided with a Bluetooth gateway submodule.

A charging system includes: an electrical energy conversion apparatus and multiple electrical energy receiving apparatuses connected in cascade, where the charging system is configured to charge a battery pack electrically connected to an electrical energy receiving apparatus; and a communication module, where the charging system is configured to establish a communication connection and perform data interaction with an external device through the communication module. The communication module forms a wireless communication link in the charging system and/or between the charging system and the external device for transmitting data. The communication module includes a storage unit. Data untransmitted at present is retained in the storage unit when the wireless communication link is interrupted. The communication module is configured to, after the wireless communication link is restored, continue the data transmission uncompleted before the link interruption.

In some examples, the communication module is configured to clear the data in the storage unit after the data transmission is completed.

In some examples, the communication module is further configured to, after the wireless communication link is restored, transmit fault information corresponding to the interruption of the wireless communication link.

In some examples, the communication module is configured to add, during data transmission, a device identifier of the electrical energy receiving apparatus and/or the electrical energy conversion apparatus passed through to the data.

In some examples, the device identifier includes the media access control (MAC) address of a device or a device ID.

In some examples, the communication module includes one or more of a Bluetooth submodule, a Bluetooth gateway submodule, a Wi-Fi submodule, and a cellular submodule.

In some examples, the communication module is configured to perform the data interaction with the external device through at least one of the Bluetooth submodule, the Wi-Fi submodule, and the cellular submodule.

In some examples, the communication module includes a Bluetooth gateway submodule and a Wi-Fi submodule disposed in the electrical energy conversion apparatus.

In some examples, a Bluetooth submodule is disposed in each of at least part of battery packs and/or each of at least part of electrical energy receiving apparatuses in the charging system.

In some examples, the storage unit is the storage unit of the Bluetooth submodule.

In some examples, the communication module is configured to, when the wireless communication link is interrupted, record an offset identifier corresponding to the data untransmitted at present and is configured to, after the wireless communication link is restored, continue the data transmission uncompleted before the link interruption based on the recorded offset identifier.

In some examples, the communication module is configured to, when transmitting the data through the wireless communication link, dynamically update the offset identifier or the bitmap identifier corresponding to the transmitted data and is configured to, after the wireless communication link is interrupted and restored, continue, based on the offset identifier or the bitmap identifier recorded at present, the data transmission uncompleted before the interruption.

In some examples, the communication module is configured to, in the case where the wireless communication link is restored within a limited duration after the interruption, continue the data transmission uncompleted before the link interruption.

A charging combination includes an adapter and a battery pack electrically connected to the adapter detachably. The adapter includes: an adapter housing; an electrical energy input port configured to access electrical energy to charge the battery pack; and at least one coupling portion for electrically connecting the battery pack detachably. The charging combination further includes a communication module. The charging combination is configured to establish a communication connection and perform data interaction with an external device through the communication module. The communication module forms a wireless communication link between the charging combination and the external device or between the charging combination and an electrical energy conversion apparatus for transmitting data. The communication module includes a storage unit. Data untransmitted at present is retained in the storage unit when the wireless communication link is interrupted. The communication module is configured to, after the wireless communication link is restored, continue the data transmission uncompleted before the link interruption.

A battery pack includes: a battery pack housing; a cell unit accommodated in the battery pack housing; a terminal assembly configured to be coupled to a power tool or an adapter so as to transmit electrical energy; and a communication module configured to establish a communication connection and perform data interaction with an external device. The communication module forms a wireless communication link between the battery pack and the external device or between the battery pack and a charger for transmitting data. The communication module includes a storage unit. Data untransmitted at present is retained in the storage unit when the wireless communication link is interrupted. The communication module is configured to, after the wireless communication link is restored, continue the data transmission uncompleted before the link interruption.

A charging system includes: an electrical energy conversion apparatus and multiple electrical energy receiving apparatuses connected in cascade, where the charging system is configured to charge battery packs electrically connected to the multiple electrical energy receiving apparatuses; and a communication module, where the charging system is configured to establish a communication connection and perform data interaction with an external device through the communication module. The communication module forms a wireless communication link and a bus-based wired communication link in the charging system and/or between the charging system and the external device. The communication module is configured to perform data transmission through the wired communication link and the wireless communication link simultaneously.

In some examples, the communication module includes a Bluetooth submodule and/or a Bluetooth gateway submodule.

In some examples, the communication module includes a bus and Bluetooth submodules disposed in at least part of the battery packs, and battery pack data is transmitted simultaneously through the bus-based wired communication link and the wireless communication link based on the Bluetooth submodules.

In some examples, the battery pack data includes one or more of a discharging duration, the amount of discharged electricity, and charging and discharging times of each of the battery packs within a preset period and the number of cycles, the maximum recoverable capacity, and fault information of each of the battery packs.

In some examples, the electrical energy conversion apparatus is configured to receive control data from the external device through the wireless communication link and transmit the control data to the electrical energy receiving apparatuses and/or the battery packs through the wired communication link.

In some examples, the Bluetooth submodule is configured to broadcast out broadcast information carrying a data-to-be-transmitted identifier, and the Bluetooth gateway submodule is configured to, after scanning the broadcast information, actively establish a communication connection with the Bluetooth submodule, so as to acquire to-be-transmitted data of the Bluetooth submodule.

In some examples, the communication submodule further includes a Wi-Fi submodule or a cellular submodule, and the communication module is configured to perform the data interaction with the external device through the Wi-Fi submodule or the cellular submodule.

In some examples, the communication module includes the wired communication link based on an RS485 bus or a controller area network (CAN) bus.

In some examples, the wired communication link and the wireless communication link transmit the same data simultaneously, and/or the wired communication link and the wireless communication link transmit different data simultaneously.

A charging system includes: an electrical energy conversion apparatus and multiple electrical energy receiving apparatuses connected in cascade, where the charging system is configured to charge a battery pack electrically connected to an electrical energy receiving apparatus; and a communication module, where the charging system is configured to establish a communication connection and perform data interaction with an external device through the communication module. The communication module forms a wireless communication link and a bus-based wired communication link in the charging system and/or between the charging system and the external device. The communication module includes one or more communication submodules. A communication submodule as a data sender selectively performs data transmission through one of the wired communication link and the wireless communication link based on a link state of each of two communication links from the communication submodule to the external device or another communication submodule as a data receiver.

In some examples, the communication submodule is configured to switch the used wired communication link or the used wireless communication link based on the busyness of each of the two communication links.

In some examples, the communication submodule is configured to switch the used wired communication link or the used wireless communication link based on the signal strength of each of the two communication links.

In some examples, the electrical energy conversion apparatus is configured to receive control data from the external device through the wireless communication link and transmit the control data to the electrical energy receiving apparatuses and/or the battery packs through the wired communication link.

A management system of a charging system includes: the charging system and an external device. The charging system includes: at least one electrical energy conversion apparatus and multiple electrical energy receiving apparatuses connected in cascade, where the charging system is configured to charge a battery pack electrically connected to an electrical energy receiving apparatus; and a communication module, where the charging system is configured to establish a communication connection and perform data interaction with the external device through the communication module. The external device includes: a display; a transceiver configured to receive state data of the charging system from the communication module; and a processor configured to simultaneously display state data of an electrical energy conversion apparatus, state data of the electrical energy receiving apparatus, and state data of the battery pack on the main interface of the display.

In some examples, the external device is configured to establish a communication connection with the electrical energy conversion apparatus and receive the state data of the charging system.

In some examples, the state data of the electrical energy conversion apparatus includes one or more of the time when the charging system starts working, the duration for which the charging system has worked, and the remaining working duration of the charging system.

In some examples, the state data of the electrical energy receiving apparatus includes one or more of the number of lower-level electrical energy receiving apparatuses cascaded to the electrical energy receiving apparatus, the number of battery packs electrically connected to the electrical energy receiving apparatus, the time when the electrical energy receiving apparatus starts working, the duration for which the electrical energy receiving apparatus has worked, and the remaining working duration of the electrical energy receiving apparatus.

In some examples, the state data of the battery pack includes the number of battery packs in the charging system, the number of battery packs with a Bluetooth function, and the charging state of a battery pack without the Bluetooth function.

In some examples, the state data of the battery pack further includes a real-time charging progress of the charging system, and the real-time charging progress includes the number of battery packs in the charging system that are fully charged at present, the number of battery packs in the charging system that are being charged, and the number of battery packs in the charging system that are to be charged.

In some examples, the battery pack includes a first type of battery pack with a Bluetooth function and a second type of battery pack without the Bluetooth function. After the first or second type of battery pack is electrically connected to the charging system or the charging combination, the electrical energy receiving apparatus or the electrical energy conversion apparatus identifies the first or second type of battery pack based on a transmitted device identifier.

In some examples, the state data of the battery pack further includes one or more of a real-time state of charge (SoC) of each battery pack, the duration for which each battery pack has been charged, and the remaining charging duration of each battery pack.

In some examples, the processor is further configured to display fault information of the charging system simultaneously on the main interface of the display.

In some examples, the main interface includes an inventory display region, the inventory display region includes a function menu for a user to make a selection, and the function menu includes user information and device information of the charging system.

A management system of a charging system includes the charging system and an external device. The charging system includes: at least one electrical energy conversion apparatus and multiple electrical energy receiving apparatuses connected in cascade, where the charging system is configured to charge a battery pack electrically connected to an electrical energy receiving apparatus; and a communication module, where the charging system is configured to establish a communication connection and perform data interaction with the external device through the communication module. The external device includes: a display; and a transceiver configured to receive state data of the charging system from the communication module. The display has a main interface, and the main interface includes a running state display region, a fault information display region, and an inventory display region. At least the running state of an electrical energy conversion apparatus and the running state of the battery pack are displayed in the running state display region. The inventory display region includes a function menu for a user to make a selection.

In some examples, the function menu includes user information and device information of the charging system.

In some examples, one or more of time when the electrical energy conversion apparatus starts working, the duration for which the electrical energy conversion apparatus has worked, and the remaining working duration of the electrical energy conversion apparatus are displayed in the running state display region.

In some examples, one or more of the number of battery packs in the charging system, the number of battery packs with a Bluetooth function, the charging state of a battery pack without the Bluetooth function, and a real-time charging progress of the charging system are displayed in the running state display region.

An external device includes: a display and a transceiver; and a processor configured to display state data of a charging system on the main interface of the display. The external device is configured to perform data interaction with an electrical energy conversion apparatus or a battery pack in the charging system through the transceiver. The main interface includes a running state display region, a fault information display region, and an inventory display region. At least the running state of the electrical energy conversion apparatus and the running state of the battery pack are displayed in the running state display region. The inventory display region includes a function menu for a user to make a selection.

In some examples, the external device is configured to transmit corresponding control data to the charging system through the transceiver in response to user input so as to adjust a corresponding parameter of the charging system.

In some examples, the charging system includes: at least one electrical energy conversion apparatus and multiple electrical energy receiving apparatuses connected in cascade, where the charging system is configured to charge a battery pack electrically connected to an electrical energy receiving apparatus; and a communication module, where the charging system is configured to establish a communication connection and perform data interaction with the external device through the communication module.

In some examples, the function menu includes user information and device information of the charging system.

In some examples, one or more of time when the electrical energy conversion apparatus starts working, the duration for which the electrical energy conversion apparatus has worked, and the remaining working duration of the electrical energy conversion apparatus are displayed in the running state display region.

In some examples, one or more of the number of battery packs in the charging system, the number of battery packs with a Bluetooth function, the charging state of a battery pack without the Bluetooth function, and a real-time charging progress of the charging system are displayed in the running state display region.

In some examples, the external device includes one or more of a mobile phone, a tablet computer, a notebook computer, and a smart wearable device.

An electric wheeled device includes: a chassis; a travelling wheel assembly mounted to the chassis; a travelling electric motor having a drive shaft and configured to drive the travelling wheel assembly; a power supply assembly configured to power at least the travelling electric motor; a wireless communication module configured to communicate with an external device; and an energy storage assembly configured to power the wireless communication module. The power supply assembly is connected to the energy storage assembly and the wireless communication module, and the energy storage assembly is connected to the wireless communication module. When the electric wheeled device is in the on state, the power supply assembly charges the energy storage assembly and powers the wireless communication module. When the electric wheeled device is in the off state, the energy storage assembly powers the wireless communication module.

In some examples, the electric wheeled device further includes a power switching module. The power switching module is configured to, when the electric wheeled device is in the on state, control the power supply assembly to power the wireless communication module and is configured to, when the electric wheeled device is in the off state, control the energy storage assembly to power the wireless communication module.

In some examples, the electric wheeled device further includes a first voltage regulation module. A first end of the first voltage regulation module is connected to the power supply assembly, and a second end of the first voltage regulation module is connected to the energy storage assembly and the power switching module.

In some examples, the electric wheeled device further includes a second voltage regulation module. A first end of the second voltage regulation module is connected to the power switching module, and a second end of the second voltage regulation module is connected to the wireless communication module.

In some examples, the wireless communication module includes a Bluetooth module configured to connect the electric wheeled device to the external device.

In some examples, the wireless communication module includes a positioning module configured to acquire a real-time position of the electric wheeled device.

In some examples, the wireless communication module includes a 4G module configured to send state information of the electric wheeled device to the external device.

In some examples, the electric wheeled device further includes a control module connected to the wireless communication module. The control module includes a wake-up assembly. The wake-up assembly is configured to, when the electric wheeled device is in the off state, wake up the wireless communication module.

In some examples, the electric wheeled device includes a predetermined accommodating space. The predetermined accommodating space includes a cover, and the wireless communication module is fixedly mounted below the cover of the predetermined accommodating space.

In some examples, the wireless communication module is disposed on a first surface of a communication circuit board, and the energy storage assembly is disposed on a second surface of the communication circuit board.

### BRIEF DESCRIPTION OF DRAWINGS

FIG. 1 is a system diagram of a charging system as an example;
FIG. 2A is a perspective view of a battery pack as an example;
FIG. 2B is a perspective view of the internal structure of the battery pack shown in FIG. 2A;
FIG. 3A is a perspective view of a charging combination and an adapter as an example;
FIG. 3B is a perspective view of a charging combination and an adapter as another example;
FIG. 4 is a plan view of a charger and part of the internal structure of the charger as an example;
FIG. 5A is a perspective view of a riding vehicle as an example;
FIG. 5B is a perspective view of a power tool as an example;
FIG. 6A is a system diagram showing that a communication submodule in the charging system shown in FIG. 1 broadcasts out;
FIG. 6B is another system diagram showing that a communication submodule in the charging system shown in FIG. 1 broadcasts out;
FIG. 7 is a flowchart showing that a communication module in the charging system shown in FIGS. 6A and 6B broadcasts and is connected;
FIG. 8 is a flowchart showing that a communication module in the charging system shown in FIG. 1 continues transmission after a link is interrupted and restored;
FIG. 9A is a schematic diagram of a wired communication link and a wireless communication link in the charging system shown in FIG. 1;
FIG. 9B is another schematic diagram of a wired communication link and a wireless communication link in the charging system shown in FIG. 1;
FIG. 10 is a flowchart showing that a communication module in the charging system shown in FIG. 1 switches and selects a wired communication link or a wireless communication link;
FIG. 11A is a system diagram of a management system of a charging system as an example;
FIG. 11B is a schematic diagram of the electrical control of an external device in the management system shown in FIG. 11A;
FIG. 12 is a schematic diagram of the main interface of a display of an external device in the management system shown in FIG. 11A;
FIG. 13 is another schematic diagram of the main interface of a display of an external device in the management system shown in FIG. 11A;
FIG. 14 is a perspective view of an electric wheeled device as an example;
FIG. 15 is a perspective view of the electric wheeled device shown in FIG. 14 from another viewing angle;
FIG. 16 is a top view of the electric wheeled device shown in FIG. 14;
FIG. 17 is a perspective view of a wireless communication module and an energy storage assembly of the electric wheeled device shown in FIG. 14;
FIG. 18 is a perspective view of the internal structure of the wireless communication module shown in FIG. 17;
FIG. 19 is a schematic diagram showing the connection of a power supply assembly, an energy storage assembly, and a wireless communication module as an example;
FIG. 20 is a schematic diagram showing the connection of a power supply assembly, an energy storage assembly, a wireless communication module, and a voltage regulation module as another example;
FIG. 21 is a schematic diagram showing the connection of a power supply assembly, an energy storage assembly, a wireless communication module, and a control module as another example; and
FIG. 22 is a schematic diagram showing the connection between an energy storage assembly and an energy storage assembly detection module as an example.

### Reference list

- 1: charging system
- 10: charging combination
- 2: management system
- 100: battery pack
- 200: electrical energy receiving apparatus
- 200a: adapter
- 300: electrical energy conversion apparatus
- 300a: charger
- 400: power tool/riding vehicle
- 500: communication module
- 600: external device
- 110: battery pack housing
- 120: cell unit
- 130: terminal assembly
- 210: adapter housing
- 220: coupling portion
- 231: electrical energy input port
- 232: electrical energy output port
- 310: charger housing
- 320: conversion circuit
- 331: power interface
- 332: connecting port
- 510: communication submodule
- 511: first communication submodule
- 512: second communication submodule
- 513: third communication submodule
- 510a: Bluetooth submodule
- 510b: Bluetooth gateway submodule
- 510c: Wi-Fi submodule
- 510d: cellular submodule
- 520: wireless communication link
- 521: Bluetooth-Bluetooth gateway wireless communication link
- 522: Wi-Fi or cellular wireless communication link
- 530: wired communication link
- 531: bus wired communication link
- 540: storage unit
- 610: display
- 611: main interface
- 620: transceiver
- 630: processor
- 611a: running state display region
- 611b: inventory display region
- 611c: fault information display region

### DETAILED DESCRIPTION

Before any example of the present application is explained in detail, it is to be understood that the present application is not limited to its application to the structural details and the arrangement of components set forth in the following description or illustrated in the preceding drawings.

In the present application, the terms "comprising", "including", "having", or any other variation thereof are intended to cover an inclusive inclusion such that a process, method, article, or device comprising a series of elements includes not only those series of elements, but also other elements not expressly listed, or elements inherent in the process, method, article, or device. Without further limitations, an element defined by the phrase "comprising a..." does not preclude the presence of additional identical elements in the process, method, article, or device comprising that element.

In the present application, the term "and/or" is used for describing the association relationship between associated objects, which means that there can be three kinds of relationships. For example, A and/or B can indicate that A exists alone, A and B exist simultaneously, and B exists alone. In addition, the character "/" in the present application generally indicates the "and/or" relationship between the contextual associated objects.

In the present application, the terms "connection", "combination", "coupling", and "mounting" may be direct connection, combination, coupling, or mounting and may also be indirect connection, combination, coupling, or mounting. Among them, for example, direct connection means that two members or assemblies are connected together without intermediate members, and indirect connection means that two members or assemblies are separately connected to at least one intermediate member and the two members or assemblies are connected to each other by the at least one intermediate member. In addition, "connection" and "coupling" are not limited to physical or mechanical connections or couplings and may include electrical connections or couplings.

In the present application, it is to be understood by those of ordinary skill in the art that a relative term (such as "about", "approximately", and "substantially") used in conjunction with a quantity or a condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to that an indicated value is added or reduced by a certain percentage (such as 1%, 5%, 10%, or more). A value not modified by the relative term should also be disclosed as a particular value with a tolerance. In addition, when expressing a relative angular position relationship (for example, substantially parallel or substantially perpendicular), "substantially" may refer to that a certain degree (such as 1 degree, 5 degrees, 10 degrees, or more) is added to or subtracted from the indicated angle.

In the present application, it is to be understood by those of ordinary skill in the art that the function implemented by an assembly may be implemented by one assembly, multiple assemblies, one part, or multiple parts. Similarly, a function implemented by a part may be implemented by one part, one assembly, or a combination of parts.

In the present application, the terms "up", "down", "left", "right", "front", and "rear", and other directional words are described based on the orientation or positional relationship shown in the drawings and should not be understood as limitations to the examples of the present application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, the lower side may include directly below, bottom left, bottom right, front bottom, and rear bottom.

In the present application, the terms "controller", "processor", "central processing unit", "central processing unit (CPU)", and "microcontroller unit (MCU)" are interchangeable. Where a unit such as the "controller", the "processor", the "central processing unit", the "CPU", or the "MCU" is configured to perform specific functions, these functions may be performed by a single one of the preceding units or multiple preceding units unless otherwise indicated.

In the present application, the term "device", "module", or "unit" is used to implement a specific function in the form of hardware or software.

In the present application, the terms "computing", "judging", "controlling", "determining", "identifying", and the like refer to the operations and processes of a computer system or similar electronic computing device (for example, the controller, the processor, or the like).

Technical solutions proposed in the present application are described below in detail in conjunction with drawings and examples.

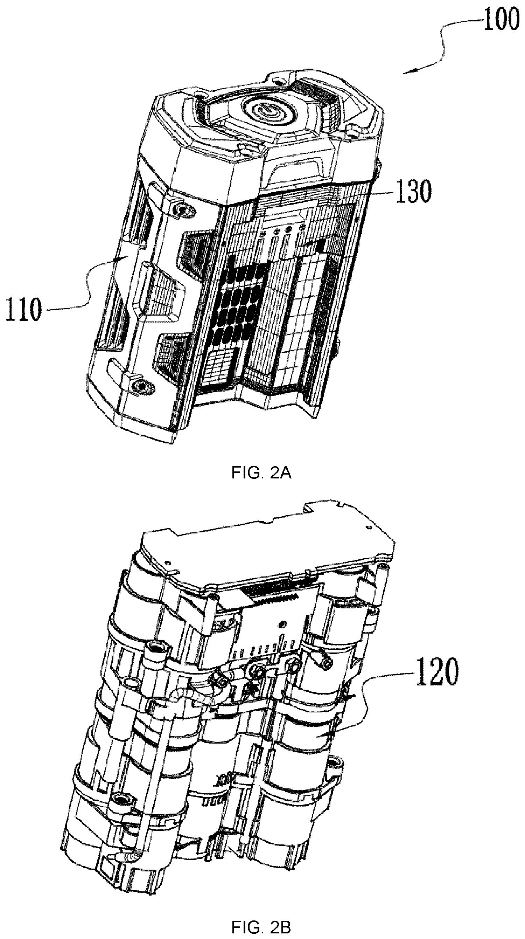

Firstly, referring to FIGS. 2A and 2B, a battery pack 100 in the present application is described. One battery pack 100 may be regarded as an independent device. The battery pack 100 includes at least a battery pack housing 110 that forms the main appearance of the battery pack 100, cell units 120 for storing electrical energy, and a terminal assembly 130 for transmitting electrical energy. Furthermore, the battery pack 100 in the present application also involves a communication module 500 to achieve a communication or management function which the present application intends to improve. Details of the communication module 500 are described later in detail.

The battery pack housing 110 can support, connect, limit, and fix the other components and assemblies of the battery pack 100. An accommodating space is formed in the preceding battery pack housing 110. One or more cell units 120 are accommodated in the accommodating space of the preceding housing. Each of the preceding cell units 120 may be a lithium-ion battery including, but not limited to, a ternary lithium cell and a lithium iron phosphate cell. Each of the preceding cell units 120 may be a cylindrical battery, a square battery, or a pouch cell. Each of the preceding cell units 120 may be a single-tab battery, a double-tab battery, or a full-tab battery. A cell support is also generally disposed in the battery pack housing 110. The cell support can support and protect at least part of the cell units 120. The terminal assembly 130 is at least partially disposed on the battery pack housing 110. The terminal assembly 130 may include positive and negative terminals for charging the cells and allowing the cells to discharge electricity and may further include a communication terminal for transmitting battery pack data through wired communication. Components and assemblies for transmitting electrical energy and/or data such as a cell connecting sheet and an electronic cable and components and assemblies related to control and management functions such as a circuit board, a controller, and a sensor are also generally disposed in the battery pack housing 110.

The battery pack 100 in the present application is detachably connectable to a power tool 400. One battery pack 100 may be mounted to different power tools 400 to power the power tools 400. The different power tools 400 may be different tools of the same type or tools of different types. For example, one battery pack 100 may be adaptable to one or more models of chainsaws. One battery pack 100 may be adaptable to certain models of chainsaws and certain models of riding mowers or even may be further adaptable to certain models of pruners. Similarly, one power tool 400 may be mounted with different battery packs 100 to be powered. For example, one model of power tool 400 may be adaptable to two models of battery packs 100. These two models of battery packs 100 may differ in the mechanical structures such as the materials and appearances and/or the electrical characteristics such as the capacities and voltages. For example, a new battery pack 100 has a Bluetooth function while an old battery pack 100 does not. In summary, multiple battery packs 100 that are identical or at least partially different may form relatively complex adaptation relationships with one or more power tools 400, which are not enumerated here. However, different power tools 400 that can share the same battery pack 100 or different battery packs 100 that can be used by the same power tool 400 generally have the same or similar interface structures.

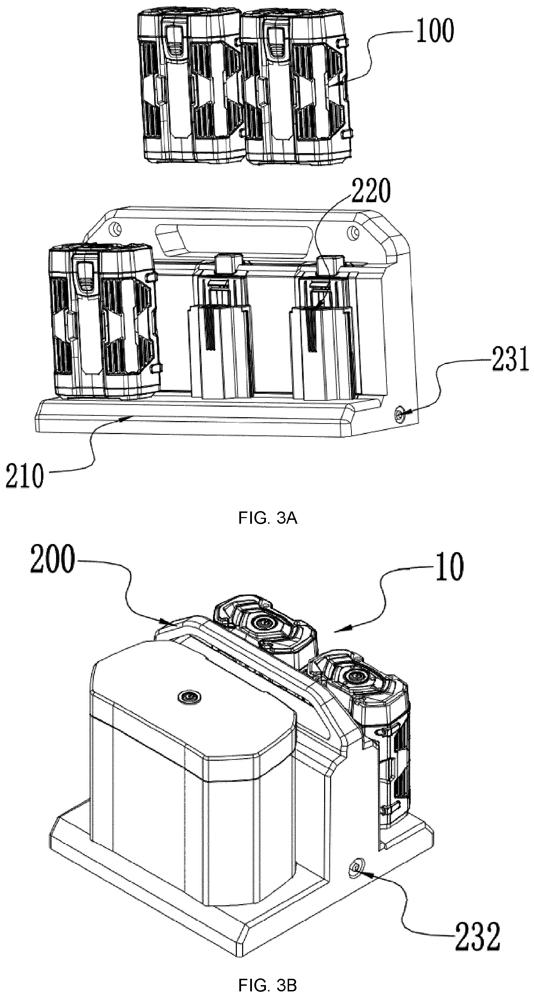

Secondly, referring to FIGS. 3A and 3B, a charging combination 10 in the present application is described. The charging combination 10 is constituted by an adapter 200a and the battery pack 100 that is electrically connected to the adapter 200a detachably. In a main constitution manner, the charging combination 10 includes one adapter 200a and one or more battery packs 100 that are electrically connected to the adapter 200a detachably. In other constitution manners, the charging combination 10 may include multiple adapters 200a with a cascading relationship and one or more battery packs 100 each of which is electrically connected to a respective one of the adapters 200a detachably.

In the charging combination 10, the same adapter 200a can be electrically connected to one or more battery packs 100 detachably. The electrical connection is mainly implemented through interfacing here. However, it is not excluded that the interface of a battery pack 100 of the one or more battery packs 100 and the interface of the adapter 200a cannot be directly connected to each other, so an additional connecting wire is further disposed between the two. It is also not excluded that the battery pack 100 and the adapter 200a are wirelessly connected to each other through a coupling coil. In some examples, as shown in FIG. 3A, multiple interfaces for the battery pack 100 to be inserted disposed on the same adapter 200a have the same structure. The adapter 200a can be electrically connected to multiple identical battery packs 100. In other examples, as shown in FIG. 3B, at least part of multiple interfaces for the battery pack 100 to be inserted disposed on the same adapter 200a have different structures. For example, two types of interfaces are disposed on the adapter 200a so that the adapter 200a can be electrically connected to two different battery packs 100. In other words, in some examples, multiple battery packs 100 electrically connected to the same adapter 200a have the same mechanical structure and/or electrical characteristic. In other examples, at least part of the multiple battery packs 100 electrically connected to the same adapter 200a have different mechanical structures and/or electrical characteristics. The mechanical structure of the battery pack 100 may include model, size, material, appearance, and interface type, and the electrical characteristic of the battery pack 100 may include cell type, nominal capacity, nominal voltage, average charging and discharging current, and average charging and discharging power.

As shown in FIGS. 3A and 3B, the adapter 200a at least includes an adapter housing 210 that forms the main appearance of the adapter 200a, an electrical energy input port 231 for accessing electrical energy, and at least one coupling portion 220 to which the battery pack 100 is electrically connected detachably. Alternatively, the adapter 200a may further include an electrical energy output port 232 for outputting electrical energy to lower-level adapters 200a that are cascaded to the adapter 200a. The adapter housing 210 can support, connect, limit, and fix the other components and assemblies of the adapter 200a. An accommodating space is formed in the adapter housing 210. Related circuits may be accommodated in the accommodating space of the preceding housing. The electrical energy input port 231, the electrical energy output port 232, and the coupling portion 220 mentioned above may be disposed or formed on the preceding adapter housing 210. Furthermore, the adapter 200a in the present application also involves the communication module 500 to achieve the communication or management function which the present application intends to improve. The details of the communication module 500 are described later in detail.

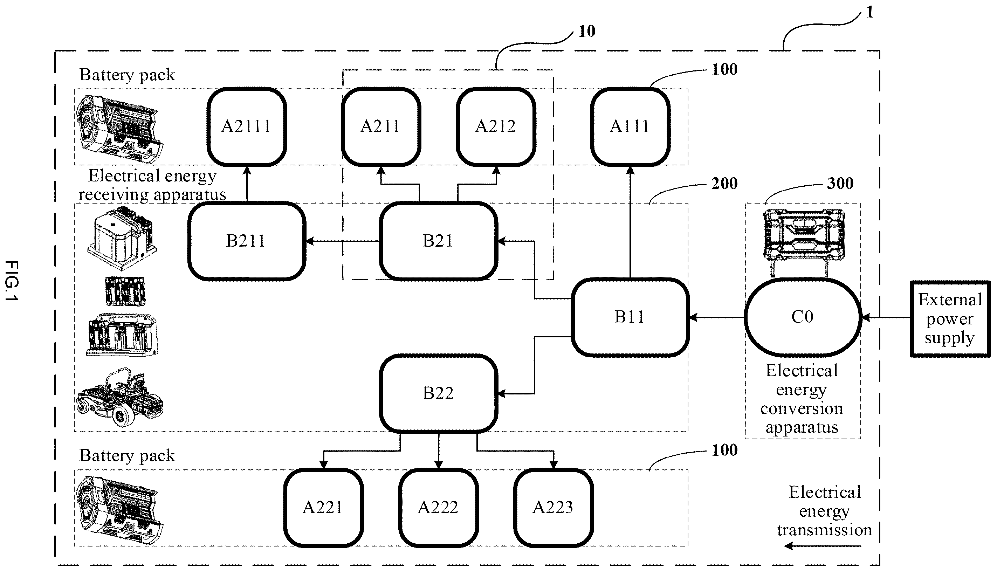

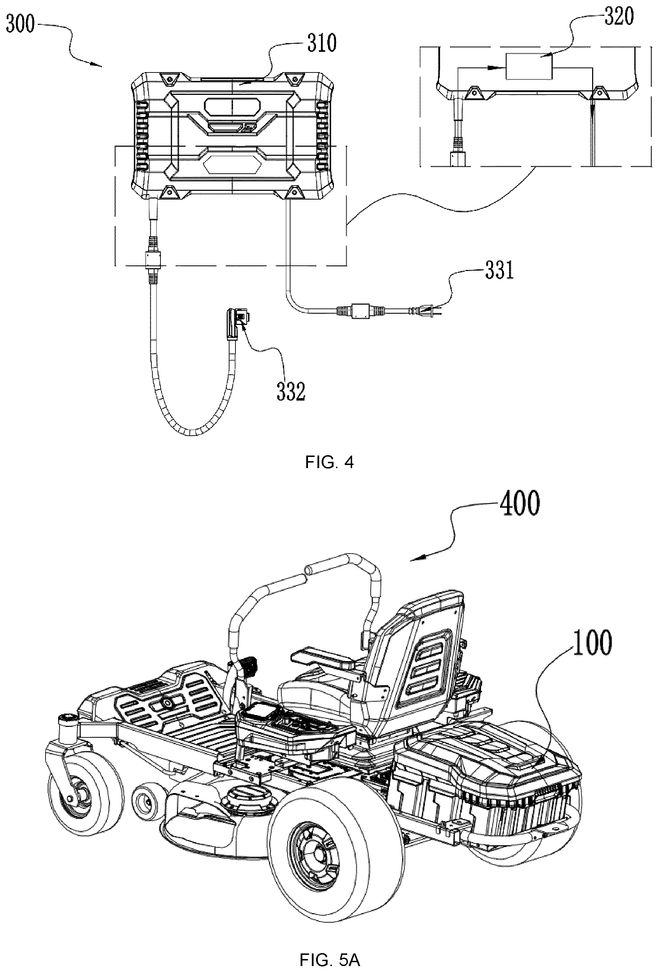

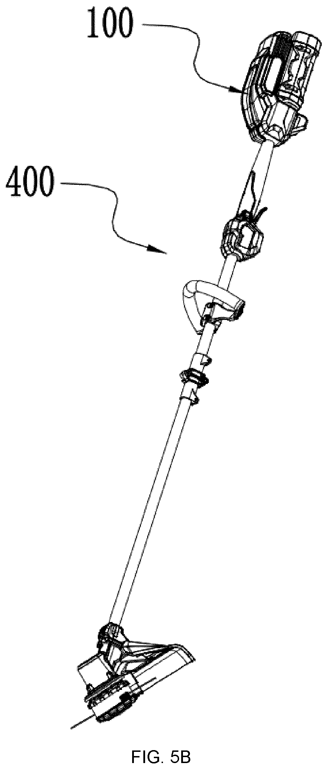

Next, referring to FIGS. 1 to 5B, a charging system 1 in the present application is described. The charging system 1 is constituted by a charger 300a (a charging station/a charging pile) and an adapter 200a that forms a cascading relationship. Furthermore, the charging system 1 may also include the battery pack 100 and/or the power tool 400. In a main constitution manner, the charging system 1 includes one charger 300a, one adapter 200a electrically connected to the charger 300a, and one or more other adapters 200a cascaded to the adapter 200a. Additionally, each adapter 200a can be electrically connected to one or more battery packs 100 detachably separately. In some examples, it may be considered that the charging system 1 includes the battery pack 100 in addition to the charger 300a and the adapter 200a. Based on this, in a possible constitution manner, any adapter 200a in the cascading relationship may be replaced by the power tool 400 such as a riding vehicle 400. That is, a lower-level device cascaded to the adapter 200a may be the power tool 400, or the adapter 200a may be cascaded to the power tool 400. Moreover, the battery pack 100 can also be electrically connected to the power tool 400 detachably in addition to the adapter 200a. It is to be understood that the battery pack 100 is electrically connected to the adapter 200a or the power tool 400 in the cascading relationship so that the battery pack 100 is charged, and the battery pack 100 is electrically connected to the power tool 400 to power the power tool 400.

As shown in FIG. 4, the charger 300a includes at least a charger housing 310 that forms the main appearance of the charger 300a, a power interface 331 for accessing electrical energy of an external power supply, a connecting port 332 electrically connected to the adapter 200a or the power tool 400, and a conversion circuit 320 connected between the preceding power interface 331 and the preceding connecting port 332. The charger housing 310 can support, connect, limit, and fix the other components and assemblies of the charger 300a. An accommodating space is formed in the charger housing 310. The preceding conversion circuit 320 may be accommodated in this accommodating space, and the power interface 331 and the connecting port 332 mentioned above may be disposed on the charger housing 310. Furthermore, the charger 300a in the present application also involves the communication module 500 to achieve the communication or management function which the present application intends to improve. The details of the communication module 500 are described later in detail.

To describe the technical solutions of the present application below more clearly and briefly and prevent devices in the present application from being confused with similar devices in the related art, the devices in the present application are uniformly named here. Chargers, charging stations, charging piles, and other similar devices that can access an external power supply such as mains electricity to introduce electrical energy into the system are referred to as electrical energy conversion apparatuses 300. Adapters, power tools such as riding vehicles, and other similar devices that can be cascaded and charge battery packs electrically connected to the devices are referred to as electrical energy receiving apparatuses 200. The battery packs 100 are considered as one type of independent device, the electrical energy receiving apparatuses 200 are considered as one type of independent device, and the electrical energy conversion apparatuses 300 are considered as one type of independent device. Therefore, the charging system 1 described above includes at least two types of devices: the electrical energy conversion apparatuses 300 and the electrical energy receiving apparatuses 200 (alternatively, the charging system 1 further includes the battery packs 100). In addition, the electrical energy receiving apparatuses 200 have the cascading relationship in the charging system 1. One of the functions of the charging system 1 is to use the external power supply to collaboratively serve and charge multiple battery packs 100. For example, the charger 300a may be connected to the mains electricity, and the multiple adapters 200a connected in cascade transmit converted electrical energy to charge the multiple battery packs 100 mounted in the system. The charging combination 10 described above includes two types of devices: the battery packs 100 and the electrical energy receiving apparatuses 200. In addition, the one or more battery packs 100 are electrically connected to an electrical energy receiving apparatus 200 detachably. One of the functions of the charging combination 10 is to use a movable electrical energy receiving apparatus 200 to serve and charge the one or more battery packs 100. For example, a relatively portable adapter 200a may be used for charging one or more battery packs 100 in a field. The charging combination 10 is described below using the adapter 200a and the battery pack 100 on the adapter 200a as examples.

An electrical energy conversion apparatus 300 such as the charger includes at least the power interface 331, the connecting port 332, and the conversion circuit 320 connected between the power interface 331 and the connecting port 332. The power interface 331 is electrically connected to the external power supply to introduce the electrical energy into the charging system 1. The connecting port 332 is electrically connected to the electrical energy receiving apparatus 200 to input the electrical energy into the electrical energy receiving apparatus 200. The conversion circuit 320 can convert the electrical energy supplied by the external power supply into a form desired by the system. The conversion circuit 320 includes, but is not limited to, circuits for alternating/direct current conversion, buck-boost conversion, rectification, and filtering.

The electrical energy receiving apparatus 200 such as the adapter or the power tool includes at least the electrical energy input port 231 or may further include the electrical energy output port 232. The electrical energy input port 231 of the electrical energy receiving apparatus 200 may be electrically connected to the connecting port 332 of the electrical energy conversion apparatus 300 or may be electrically connected to an electrical energy output port 232 of a cascaded upper-level electrical energy receiving apparatus 200. The electrical energy output port 232 of the electrical energy receiving apparatus 200 may be electrically connected to an electrical energy input port 231 of a lower-level electrical energy receiving apparatus 200 cascaded to the electrical energy receiving apparatus 200. One electrical energy input port 231 is generally disposed on the same electrical energy receiving apparatus 200. One or more electrical energy output ports 232 may be disposed on the same electrical energy receiving apparatus 200.

The power tools 400 served by the battery pack 100, the charging combination 10, or the charging system 1 in the present application are described below. The power tools 400 may include various types of power tools 400. In some examples, the power tools 400 served by the battery pack 100, the charging combination 10, or charging system 1 mentioned above include a handheld power tool. Optionally, the handheld power tool 400 may include a handheld garden power tool such as a pruner, a blower, a string trimmer, or a chainsaw. Optionally, the handheld power tool 400 may include a handheld power tool for construction such as a screwdriver, an electric hammer, an electric drill, or a reciprocating saw. Optionally, the handheld power tool 400 may include a handheld household power tool such as an electric drill, an angle grinder, or an electric circular saw. In other examples, the power tools 400 served by the battery pack 100, the charging combination 10, or the charging system 1 mentioned above include a riding vehicle. The riding vehicle 400 is outdoor power equipment, including but not limited to, a riding mower, a stand-on mower, an all-terrain vehicle (ATV), a utility vehicle (UTV), or a side-by-side vehicle (SSV). In some examples, the power tools 400 served by the battery pack 100, the charging combination 10, or the charging system 1 mentioned above include the handheld power tool and the riding vehicle. In some examples, the power tools 400 served by the battery pack 100, the charging combination 10, or the charging system 1 mentioned above may include a robotic tool such as a robotic mower or a robotic snow thrower.

After the relevant concepts are clarified, the technical solutions proposed in the present application are further described in detail. The present application mainly intends to improve the charging system 1, the charging combination 10, and the battery pack 100 mentioned above in terms of data communication or control management. In a charging process of the battery pack 100, the charging system 1, the charging combination 10, and the battery pack 100 mentioned above may generate a large amount of data. Especially in relatively complex scenarios where multiple battery packs 100 are mounted to the cascaded adapter 200a involved in the charging system 1 to be charged and multiple battery packs 100 are inserted into the adapter 200a involved in the charging combination 10 to be charged, recording, transmitting, and collecting electricity receiving and feeding data of the preceding devices are of great value for safety assurance and other optimization. An object of the present application is to enable the data transmission between the charging system 1, the charging combination 10, and the battery pack 100 mentioned above and an external device 600, the data transmission in the charging system 1, and the data transmission in the charging combination 10 to be more efficient and consume low energy.

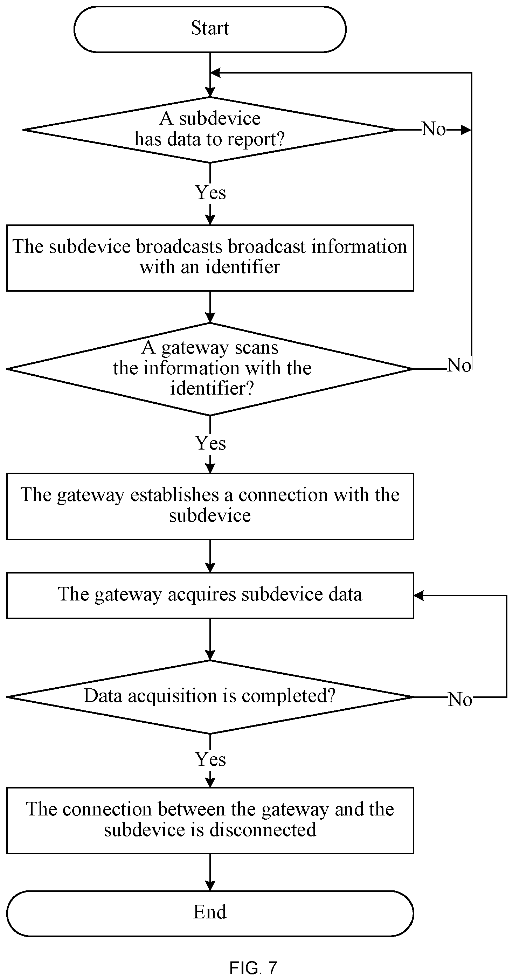

In an optional example, referring to FIGS. 1 to 7, the preceding charging system 1, which includes the electrical energy conversion apparatus 300 and the multiple electrical energy receiving apparatuses 200 connected in cascade, further includes the communication module 500. The charging system 1 is configured to charge the battery pack 100 electrically connected to the electrical energy receiving apparatus 200 in the system and is further configured to establish a communication connection with the external device 600 through the preceding communication module 500 to implement data interaction with the external device 600. Following on from the preceding description, the electrical energy conversion apparatus 300 converts the electrical energy from the external power supply into electrical energy that meets system requirements and then inputs the electrical energy to a first-level electrical energy receiving apparatus 200 that is in the cascading relationship and electrically connected to the connecting port 332 of the electrical energy conversion apparatus 300. The multiple electrical energy receiving apparatuses 200 connected in cascade sequentially obtain the electrical energy. Thus, the battery packs 100 electrically connected to the electrical energy receiving apparatuses 200 can be charged.

The communication module 500 of the charging system 1 may include one or more communication submodules 510. The multiple communication submodules 510 may be disposed on different devices separately. Specifically, a communication submodule 510 among the preceding communication submodules 510 may be disposed on any device in the charging system 1 such as any battery pack 100, any electrical energy receiving apparatus 200, or the electrical energy conversion apparatus 300. In some examples, communication submodules 510 are disposed on the battery packs 100 or part of the battery packs 100 in the charging system 1. For clarifying the relevant content, each of the communication submodules disposed on the battery packs 100 is referred to as a first communication submodule 511 herein and below. In some examples, communication submodules 510 are disposed on the electrical energy receiving apparatuses 200 or part of the electrical energy receiving apparatuses 200 in the charging system 1. Each of the communication submodules disposed on the electrical energy receiving apparatuses 200 or the adapters 200a is referred to as a second communication submodule 512 herein and below. In some examples, a communication submodule 510 is disposed on the electrical energy conversion apparatus 300 in the charging system 1. The communication submodule disposed on the electrical energy conversion apparatus 300 or the charger 300a is referred to as a third communication submodule 513 herein and below. In the case where a communication submodule 510 is disposed on a device, one or more communication submodules 510 may be disposed on the same device. In the present application, the communication submodules disposed on the devices mainly include one or more of a Bluetooth submodule 510a, a Bluetooth gateway submodule 510b, a Wi-Fi submodule 510c, and a cellular submodule 510d. For example, the third communication submodule 513 of the electrical energy conversion apparatus 300 or the charger 300a may include a Bluetooth submodule 510a or a Bluetooth gateway submodule 510b and may further include a Wi-Fi submodule 510c and/or a cellular submodule 510d.

In some examples, the communication module 500 of the charging system 1 includes the third communication submodule 513, the second communication submodule 512, and the first communication submodule 511. In other examples, the communication module 500 of the charging system 1 includes the third communication submodule 513 and the second communication submodule 512 or includes the third communication submodule 513 and the first communication submodule 511. In other examples, the communication submodule 510 of the charging system 1 includes the second communication submodule 512 and the first communication submodule 511. In other examples, the communication submodule 510 of the charging system 1 includes the first communication submodule 511, the second communication submodule 512, or the third communication submodule 513. Multiple first, second, and third communication submodules 511, 512, and 513 mentioned above may be in the charging system 1 because multiple communication submodules 510 may be disposed on the same device and also because more than one device of a certain type is in the system. Furthermore, the number of second communication submodules 512 is variable because the number of electrical energy receiving apparatuses 200 cascaded in the system is variable, and the number of first communication submodules 511 is also variable because the number of battery packs 100 electrically connected in the system is variable.

In this example, to reduce system power consumption and improve data transmission efficiency, data interaction in the charging system 1 or between the charging system 1 and the external device 600 is performed through broadcasting first and connecting later. Thus, data generated intermittently over a long period by the charging system 1 does not require a continuous communication connection. The communication submodule 510 as a data sender exists in the communication module 500 of the charging system 1. The communication submodule 510 may be the first communication submodule 511 and/or the second communication submodule 512 and/or the third communication submodule 513. The communication submodule 510 as the data sender has data to be transmitted to another communication submodule 510 or the external device 600 as a data receiver. It is to be understood that this example mainly involves wireless communication. The communication submodules 510 as a data source and a data destination are generally not on the same device. For example, the communication submodule 510 as the data receiver may be disposed on the electrical energy conversion apparatus 300, and the communication submodule 510 as the data sender may be disposed on the battery pack 100 or the electrical energy receiving apparatus 200.

In the case where the communication submodule 510 as the data sender has the to-be-transmitted data, the communication submodule 510 first broadcasts out broadcast information carrying a data-to-be-transmitted identifier. This broadcast information carrying the data-to-be-transmitted identifier at least informs the outside that the communication submodule 510 has the to-be-transmitted data. Furthermore, the broadcast information may also carry the communication address of the communication submodule 510 and the like. The communication submodule 510 or the external device 600 as the data receiver may be in a listening state and can listen for and scan broadcast information from other devices. After scanning the preceding broadcast information, the communication submodule 510 or the external device 600 may actively establish a communication connection with the communication submodule 510 as the data sender to acquire the to-be-transmitted data of that communication submodule 510 and implement the data interaction between the two. Compared with the present related technology, this example does not rely on the data sender to actively initiate the connection and does not require maintaining a continuous connection for a long period, thereby reducing energy consumption. In addition, the data receiver does not acquire data in a polling manner, so the efficiency is improved. Moreover, multiple devices that can receive the to-be-transmitted data may exist simultaneously. The data sender and the data receiver may have no binding relationship. The efficiency and reliability are better in scenarios like collecting data from the charging system 1.

Specifically, the communication submodule 510 as the data sender may have a broadcast state and a connected state. By default, this communication submodule 510 is in the broadcast state. In the broadcast state, the device establishes no communication connection with other devices, and the communication submodule 510 consumes low energy. Additionally, the broadcast state is a ready state for the connected state. After the broadcast information carrying the data-to-be-transmitted identifier sent in the broadcast state is scanned and a connection request is received, the communication submodule 510 may enter the connected state. In the connected state, the device can establish a communication connection with another device and implement point-to-point data transmission with the peer. After the data transmission ends, the communication submodule 510 can return to the broadcast state so that the communication connection is quickly established and the data interaction is performed between the source and the destination through a broadcast-state action performed on a particular channel. Thus, it is ensured that the data transmission of the system is immediate and efficient. The communication submodule 510 or the external device 600 as the data receiver may have the listening state and the connected state. The listening state and the connected state may exist simultaneously. That is, the data receiver may also listen for broadcast information from other devices while establishing the communication connection and performing the data transmission with the data sender. In some examples, the communication submodule 510 or the external device 600 as the data receiver may simultaneously perform data transmission with multiple other communication submodules 510 in the charging system 1. In some examples, the data-to-be-transmitted identifier carried in the broadcast information is an identifier mutually agreed upon by the data sender and the data receiver. For example, the data-to-be-transmitted identifier may be represented and identified by a particular field value of a particular field in a broadcast message.

In some examples, after the communication submodule 510 as the data sender successfully transmits all the to-be-transmitted data to the data receiver in the connected state, the communication submodule 510 may return to the broadcast state and broadcasts again until to-be-transmitted data of the next data transmission task is generated. In some examples, the point-to-point connection between the communication submodule 510 as the data sender and the data receiver is interrupted for longer than a preset duration threshold in the connected state. For example, when the communication abnormality such as failure to obtain a response from the peer continues and reaches the preset duration threshold, the communication submodule 510 may return to the broadcast state. The broadcast information of this data transmission task is republished or this data transmission task is abandoned.

In some examples, the preceding communication submodule 510 as the data sender is the Bluetooth submodule 510a, and the preceding communication submodule 510 as the data receiver is the Bluetooth gateway submodule 510b or the preceding external device 600 as the data receiver has a Bluetooth gateway function. Specifically, the Bluetooth submodule 510a has the broadcast state. In the broadcast state, the Bluetooth submodule 510a can broadcast various types of broadcast information to the outside such as a non-directional connectable message or a directional connectable message. The Bluetooth gateway submodule 510b has the listening state. In the listening state, the Bluetooth gateway submodule 510b can listen for and scan the preceding types of broadcast information. The specific type of broadcast information can be distinguished through an identifier carried in a message header, and the message may also carry the communication address of the Bluetooth submodule 510a. The Bluetooth submodule 510a may broadcast out and the Bluetooth gateway submodule 510b may listen for and scan external information periodically. In the case where the channels and windows of the broadcast action and the scanning action coincide, the broadcast information sent by the Bluetooth submodule 510a can be obtained by the Bluetooth gateway submodule 510b.

The non-directional connectable message and directional connectable message broadcast by the Bluetooth submodule 510a may be considered as the broadcast information carrying the data-to-be-transmitted identifier. The non-directional connectable message has no target connection object. In the case where more than one Bluetooth gateway submodule 510b exists in the charging system 1, the multiple Bluetooth gateway submodules 510b are each capable of scanning and obtaining this broadcast information and establishing communication connections with the Bluetooth submodule 510a. Even if one Bluetooth gateway submodule 510b is busy, another Bluetooth gateway submodule 510b can still implement data interaction with the preceding Bluetooth submodule 510a. After scanning and obtaining the preceding non-directional connectable message, the Bluetooth gateway submodule 510b may parse the message to determine the type of the message and the communication address of the Bluetooth submodule 510a. Then, based on the type of the message and the communication address, the Bluetooth gateway submodule 510b can send a connection request to the Bluetooth submodule 510a or further acquire information such as the name, manufacturer, transmit power, connection parameter of the Bluetooth submodule 510a. The directional connectable message has a target connection object. In addition to the preceding data-to-be-transmitted identifier and the communication address of the Bluetooth submodule 510a, the message may also carry the communication address of the specified Bluetooth gateway submodule 510b for the connection. Even if more than one Bluetooth gateway submodule 510b exists in the system, the preceding Bluetooth submodule 510a still only establishes a connection and performs data interaction with the Bluetooth gateway submodule 510b specified in the message. After scanning and obtaining the preceding directional connectable message, the specified Bluetooth gateway submodule 510b may send a connection request to the Bluetooth submodule 510a. The Bluetooth submodule 510a can establish a communication connection with the specified Bluetooth gateway submodule 510b for data transmission after verifying that the connection request is from the specified Bluetooth gateway submodule 510b.

In some examples, the Bluetooth submodule 510a may also broadcast out a non-directional non-connectable message. The non-directional non-connectable message has no target connection object. All external devices can scan and obtain the information carried in the payload of this broadcast message. However, in this scenario, no point-to-point communication connection is established between the Bluetooth submodule 510a and the Bluetooth gateway submodule 510b. For example, the Bluetooth submodule 510a may use this type of broadcast message for advertising, emergency notifications, positioning services, and the like.

It is to be understood that different types of broadcast messages have different purposes and the purposes vary depending on application requirements. This example mainly describes that one or more devices in the charging system 1 first broadcast through the Bluetooth submodule 510a and then establish point-to-point communication with the Bluetooth gateway submodule 510b of another device in the system or the Bluetooth gateway submodule 510b of the external device 600 to transmit the data of the device itself and/or data from other devices relayed to the device in charging system 1 to the device and/or the external device 600.

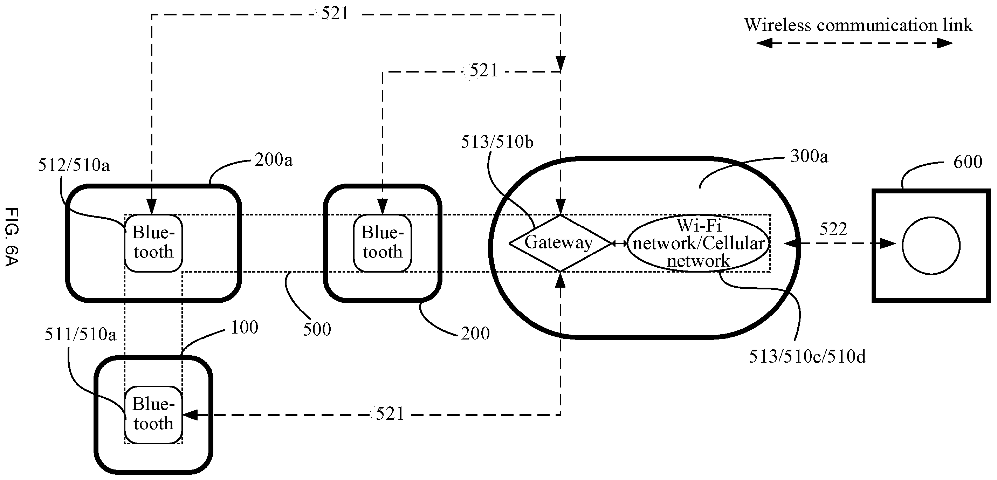

In some examples, as shown in FIG. 6A, the preceding Bluetooth submodule 510a is disposed in the battery pack 100 and/or the electrical energy receiving apparatus 200, and the Bluetooth gateway submodule 510b is disposed in the electrical energy conversion apparatus 300. In some examples, the Bluetooth submodule 510a is disposed in each of at least part of the battery packs 100 and/or at least part of the adapters 200a in the charging system 1, and the Bluetooth gateway submodule 510b is disposed in the charger 300a. Specifically, the third communication submodule 513 of the charger 300a in the charging system 1 includes the Bluetooth gateway submodule 510b. The first communication submodule 511 in each of one or more battery packs 100 in the charging system 1 includes the Bluetooth submodule 510a. One or more of static data such as the brand model, nominal voltage, and nominal capacity of the battery pack 100 and dynamic data such as the time when the battery pack 100 starts being charged, the remaining charging duration of the battery pack 100, and the duration for which the battery pack 100 has been charged in the charging system 1 may be transmitted to the charger 300a through the Bluetooth submodule 510a. Alternatively, the second communication submodule 512 in each of one or more adapters 200a in the charging system 1 includes the Bluetooth submodule 510a. One or more of static data such as the brand model of the adapter 200a, the number of interfaces to which the battery pack 100 can be electrically connected, and the number of interfaces to which other adapters 200a can be cascaded and dynamic data such as the time when the adapter 200a starts working, the remaining working duration of the adapter 200a, and the duration for which the adapter 200a has worked in the charging system 1, whether the interfaces are electrically connected to the battery pack 100 or the other adapters 200a, and the voltage, current, and power of a connected interface may be transmitted to the charger 300a through the Bluetooth submodule 510a. In some examples, whether the second communication submodule 512 in the adapter 200a includes the Bluetooth submodule 510a may depend on the specific role of the adapter 200a in the cascading relationship of the electrical energy receiving apparatus 200. For example, the to-be-transmitted data of the adapter 200a may include data from a lower-level adapter 200a of the adapter 200a. The second communication submodule 512 in the adapter 200a as a non-leaf node in the cascading relationship may include the Bluetooth submodule 510a.

The Bluetooth submodule 510a of the battery pack 100 and/or the adapter 200a mentioned above is typically in the broadcast state, that is, a disconnected state. The preceding charger 300a is typically in the listening state which may be either the disconnected state or the connected state. In the broadcast state, the Bluetooth submodule 510a of the battery pack 100 and/or the adapter 200a can periodically broadcast out the broadcast information carrying the data-to-be-transmitted identifier according to a preset period and/or can be triggered by a particular event to broadcast out the broadcast information carrying the data-to-be-transmitted identifier. In the listening state, the Bluetooth gateway submodule 510b of the charger 300a can also periodically listen for and scan the broadcast information from the external devices according to a preset period. After parsing and determining that the scanned broadcast information carries the data-to-be-transmitted identifier, the Bluetooth gateway submodule 510b of the charger 300a may act as a master to actively send a connection request to one or more Bluetooth submodules 510a that send the preceding broadcast information. The one or more Bluetooth submodules 510a act as a slave to respond to the connection request from the Bluetooth gateway submodule 510b and enter the connected state. In addition, the one or more Bluetooth submodules 510a transmit the to-be-transmitted data thereof to the Bluetooth gateway submodule 510b after the communication connection is established.

In some examples, the Wi-Fi submodule 510c or the cellular submodule 510d is further disposed in the electrical energy conversion apparatus 300 or the charger 300a. After establishing the point-to-point connection with the Bluetooth submodule 510a of the battery pack 100 and/or the adapter 200a through the Bluetooth gateway submodule 510b and receiving the data transmitted from the Bluetooth submodule 510a of the battery pack 100 and/or the adapter 200a, the electrical energy conversion apparatus 300 or the charger 300a further transmits the preceding data to the external device 600 through the Wi-Fi submodule 510c or the cellular submodule 510d.

In some examples, the external device 600 in the present application includes a user device such as a mobile phone, a tablet computer, a notebook computer, or a smart wearable device. For example, if a user uses the preceding charging system 1 to charge a battery pack 100 belonging to the user and the user also wishes to view and manage the specific process in which the charging system 1 charges the battery pack 100, the communication module 500 in the charging system 1 perform the operations in the preceding example such that the user can obtain the corresponding data through the user device to learn a specific situation. In other examples, the external device 600 includes a cloud server or another server (a server cluster). For example, the charging system 1 may belong to a company, a group, or a person. The cloud server or the server cluster is set up or rented to collect data from the charging system 1. The owner of the charging system 1 can repair, maintain, and optimize the charging system 1 in time.

In some examples, after the Bluetooth submodule 510a and the Bluetooth gateway submodule 510b establish the point-to-point communication connection, the Bluetooth submodule 510a transmits the to-be-transmitted data thereof to the Bluetooth gateway submodule 510b, and the Bluetooth gateway submodule 510b may transmit control data such as an instruction to the Bluetooth submodule 510a. In some examples, the Bluetooth submodule 510a and the Bluetooth gateway submodule 510b are integrated into a single module. The communication submodule 510 of the same device can function both as a master to listen to other slaves and as a slave to broadcast information to allow another master to be connected to it. In some examples, the communication submodule 510, which acts as the data sender in this data interaction, may act as the data receiver in another data interaction process, and the communication submodule 510, which acts as the data receiver in this data interaction, may act as the data sender in another data interaction process.

In some examples, the communication submodule 510 or the external device 600 as the data receiver may also perform authentication and verification based on the identity information carried in the broadcast information, thereby implementing targeted data collection. Specifically, based on the information that can represent a device identity, such as the communication address carried in the message, it is possible to not respond to broadcast information sent by a battery pack 100 or an adapter 200a that is not from the charging system 1 or poses a safety risk.

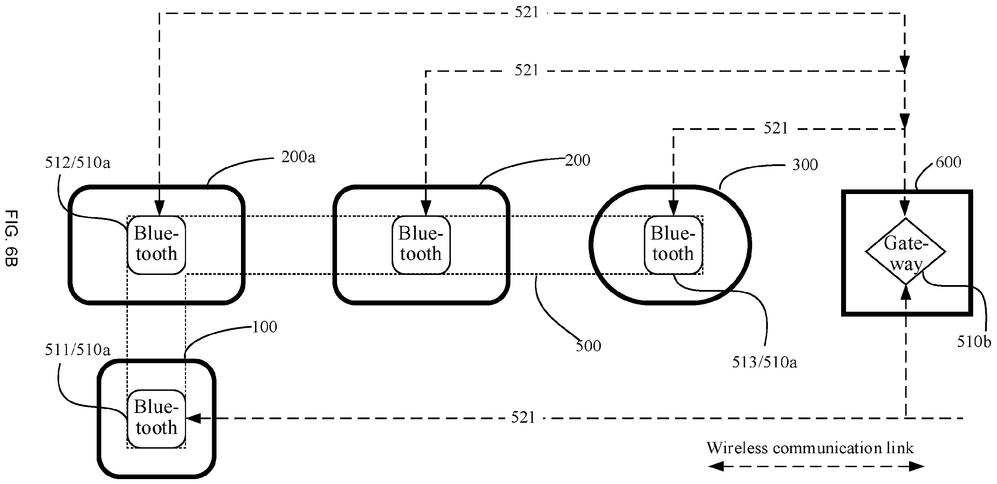

In some examples, as shown in FIG. 6B, the preceding Bluetooth submodule 510a is disposed in the battery pack 100 and/or the electrical energy receiving apparatus 200 and/or the electrical energy conversion apparatus 300, and the Bluetooth gateway submodule 510b is disposed in the user device such as a mobile phone and a tablet computer and the external device 600 such as a server. In some examples, the Bluetooth submodule 510a is disposed in the charger 300a of the charging system 1. In some examples, the Bluetooth submodule 510a is disposed in each of the at least part of the battery packs 100 and/or the at least part of the adapters 200a in the charging system 1. In some examples, the Bluetooth submodule 510a is disposed in each of the charger 300a, adapter 200a, and battery pack 100 of the charging system 1. Specifically, the Bluetooth gateway submodule 510b is disposed in the external device 600. The third communication submodule 513 of the charger 300a in the charging system 1 may include the Bluetooth submodule 510a, and/or the second communication submodule 512 in each of the one or more adapters 200a in the charging system 1 may include the Bluetooth submodule 510a, and/or the first communication submodule 511 in each of the one or more battery packs 100 in the charging system 1 may include the Bluetooth submodule 510a. The third communication submodule 513 of the charger 300a includes the Bluetooth submodule 510a. One or more of static data such as the brand model, maximum output power, and maximum output current of the charger 300a and dynamic data such as the time when the charger 300a starts working, the remaining working duration of the charger 300a, and the duration for which the charger 300a has worked in the charging system 1, and the number of battery packs 100 and/or adapters 200a mounted in the charging system 1 at present may be transmitted to the external device 600 through the Bluetooth submodule 510a. The data of the battery pack 100 and/or adapter 200a described above may also be transmitted to the external device 600 through the Bluetooth submodule 510a.

In some examples, in addition to a wireless communication manner, the communication module 500 in the charging system 1 also involves a wired communication manner. The communication module 500 may form a wired communication link between any two of the battery pack 100, the adapter 200a, the power tool 400 such as the riding vehicle 400, and the charger 300a in the charging system 1. This wired communication link may be implemented through a bus, including but not limited to, an RS485 bus and a CAN bus or may be implemented through a direct D/T connection. In some examples, the battery pack data may be transmitted to the adapter 200a through the preceding wired communication link or may be further transmitted to the charger 300a. Adapter data may also be transmitted to the charger 300a through the preceding wired communication link. The second communication submodule 512 of the adapter 200a may relay the battery pack data. The third communication submodule 513 of the charger 300a may relay the battery pack data and/or the adapter data or may also organize or reprocess the preceding data.

Following on from the preceding description, in another optional example, the charging combination 10 may exist independently of the charging system 1. The preceding charging combination 10 including the adapter 200a and the battery pack 100 electrically connected to the adapter 200a detachably further includes the communication module 500. The charging combination 10 is configured to charge the battery pack 100 electrically connected to the adapter 200a and is also configured to establish the communication connection with the external device 600 or the electrical energy conversion apparatus 300 (the charger 300a, the charging station, or the charging pile) through the preceding communication module 500 to implement the data interaction between the two. In some examples, the adapter 200a is electrically connected to the charger 300a or other adapters 200a to introduce the electrical energy into the charging combination 10 and charge the battery pack 100 electrically connected to the adapter 200a. In other examples, the multiple battery packs 100 electrically connected to the same adapter 200a may also transmit the electrical energy to each other.

In this example, similar to the charging system 1 described above, the data interaction between the charging combination 10 and the external device 600 or the electrical energy conversion apparatus 300 is performed through broadcasting first and connecting later so that data generated intermittently over a long period by the charging combination 10 does not require a continuous communication connection. The communication submodule 510 as the data sender exists in the communication module 500 of the charging combination 10. The communication submodule 510 may be the first communication submodule 511 or the second communication submodule 512. The communication submodule 510 has the data to be transmitted to the external device 600 or the charger 300a as the data receiver. The communication submodule 510 as the data sender is in the broadcast state by default. In the case where the to-be-transmitted data exists, the broadcast information carrying the data-to-be-transmitted identifier is first broadcast out in the broadcast state. The broadcast information may also carry the communication address of the communication submodule 510 and the like. The external device 600 or the charger 300a as the data receiver may be in the listening state and can listen for and scan the broadcast information of the battery pack 100 or the adapter 200a. After scanning the preceding broadcast information, the external device 600 or the charger 300a may actively establish the communication connection with the communication submodule 510 as the data sender so that the communication submodule 510 as the data sender enters the connected state, and the data receiver acquires the to-be-transmitted data of the charging combination 10, thereby implementing the data interaction between the two.

In some examples, the first communication submodule 511 in each of at least part of the battery packs 100 of the charging combination 10 includes the Bluetooth submodule 510a, and the third communication submodule 513 in the charger 300a or the external device 600 includes the Bluetooth gateway submodule 510b. In some examples, the second communication submodule 512 in the adapter 200a of the charging combination 10 includes the Bluetooth submodule 510a, and the third communication submodule 513 in the charger 300a or the external device 600 includes the Bluetooth gateway submodule 510b. In some examples, the wired communication link is formed between the adapter 200a of the charging combination 10 and the battery pack 100. The adapter data may be transmitted to the battery pack 100 through the wired communication link, or the battery pack data may be transmitted to the adapter 200a through the wireless communication link. In some examples, the wireless communication link established between the Bluetooth submodule 510a and the Bluetooth gateway submodule 510b is a bidirectional communication link. For example, the Bluetooth submodule 510a can upload data to the Bluetooth gateway submodule 510b, and the Bluetooth gateway submodule 510b can issue an instruction to the Bluetooth submodule 510a. Unless there is any conflict, for the specific contents involved in the examples, reference may be made to the preceding description of the charging system 1.

Following on from the preceding description, in another optional example, the battery pack 100 may exist independently of the charging system 1 or the charging combination 10. The preceding battery pack 100 including the battery pack housing 110, the cell units 120, and the terminal assembly 130 further includes the communication module 500, that is, the first communication submodule 511. The battery pack 100 is configured to establish the communication connection with the external device 600 or the electrical energy conversion apparatus 300 (the charger 300a, the charging station, or the charging pile) through the preceding communication module 500 to implement the data interaction between the two. The battery pack 100 can be electrically connected to the adapter 200a detachably so that the adapter 200a charges the battery pack 100. The battery pack 100 can also be electrically connected to the power tool 400 detachably so that the battery pack 100 powers the power tool 400.

In this example, similar to the charging system 1 and the charging combination 10 described above, the data interaction between the battery pack 100 and any one of the external device 600, the adapter 200a, the power tool 400, and the charger 300a is performed through broadcasting first and connecting later so that data generated intermittently over a long period in the battery pack 100 does not require a continuous communication connection. The first communication submodule 511 of the battery pack 100 acts as the data sender, and the external device 600, the charger 300a, or the like acts as the data receiver. The first communication submodule 511 of the battery pack 100 as the data sender is in the broadcast state by default. In the case where the to-be-transmitted data exists, the broadcast information carrying the data-to-be-transmitted identifier is first broadcast out in the broadcast state. The broadcast information may also carry the communication address of the first communication submodule 511 and the like. The external device 600 or the charger 300a as the data receiver may be in the listening state and can listen for and scan the broadcast information of the battery pack 100. After scanning the preceding broadcast information, the external device 600 or the charger 300a may actively establish the communication connection with the first communication submodule 511 of the battery pack 100 so that the communication submodule 510 as the data sender enters the connected state and the data receiver acquires the to-be-transmitted data of the battery pack 100, thereby implementing the data interaction between the two. In some examples, the first communication submodule 511 in the battery pack 100 includes the Bluetooth submodule 510a, and the third communication submodule 513 in the charger 300a or the external device 600 includes the Bluetooth gateway submodule 510b. Unless there is any conflict, for the specific contents involved in the examples, reference may be made to the preceding description of the charging system 1 and the charging combination 10.

In an optional example, the preceding charging system 1 including the electrical energy conversion apparatus 300 and the multiple electrical energy receiving apparatuses 200 connected in cascade further includes the communication module 500. The charging system 1 is configured to charge the battery pack 100 electrically connected to the electrical energy receiving apparatus 200 in the system and is further configured to establish the communication connection with the external device 600 through the preceding communication module 500 to implement the data interaction with the external device 600. In this example, to reduce the system power consumption and improve the data transmission efficiency, the frequency of the data interaction in the charging system 1 and the data interaction between the charging system 1 and the external device 600 can be adaptively adjusted according to a device state. The communication submodule 510 performing the data interaction with the external device 600 exists in the communication module 500 of the charging system 1. The communication submodule 510 may be the first communication submodule 511 of the battery pack 100 and/or the second communication submodule 512 of the electrical energy receiving apparatus 200 and/or the third communication submodule 513 of the charger 300a. The frequency of the data interaction between the communication submodule 510 and the external device 600 may be adjusted based on the working state of each of the one or more devices in the charging system 1, including but not limited to, adjusting a data sending/response frequency and requiring the peer to adjust the data sending/response frequency. It is to be understood that this example involves both wireless communication and wired communication.

The charging system 1 may perform the data interaction and the frequency adjustment in the system and/or outside the system through one or more of the Bluetooth submodule 510a, the Bluetooth gateway submodule 510b, the Wi-Fi submodule 510c, and the cellular submodule 510d, including but not limited to, the data interaction and the frequency adjustment in the system between the first communication submodule 511 or the second communication submodule 512 and the third communication submodule 513 and the data interaction and the frequency adjustment in and outside the system between one or more of the first communication submodule 511, the second communication submodule 512, and the third communication submodule 513 and the external device 600. In addition, it is not excluded that the communication submodule 510 performs the data transmission with frequency adaption in other wireless communication manners in addition to the preceding Bluetooth, Wi-Fi, and cellular manners. For example, the communication submodule 510 may communicate in a near field communication (NFC) manner. In addition, it is not excluded that the communication submodule 510 performs the data transmission with the frequency adaption in the wired communication manner in the charging system 1. In some examples, multiple switchable data interaction frequencies are preset in the communication submodule 510 such as an immediate upload, 1 min/time, 5 min/time, 10 min/time, or 1 h/time.

The battery pack 100, the electrical energy receiving apparatus 200, and the electrical energy conversion apparatus 300 in the charging system 1 may each have a different working state. The working state is mainly related to charging and discharging actions performed by each device in the system. Referring to Table 1, in some examples, the working state of the electrical energy conversion apparatus 300 such as the charger 300a may include one or more of the busy state or idle state in which the apparatus is at present, the idle duration for which the apparatus is continuously in the idle state, the duration for which the apparatus has continuously worked in the busy state, the number of adapters 200a or battery packs 100 mounted to the apparatus, and the input/output power of the apparatus. In the case where the battery pack 100 is preferentially charged with the electrical energy of the external power supply connected to the electrical energy conversion apparatus 300 such as the charger, the charger 300a is in the idle state at present, which means that the charging system 1 is in the idle state at present and no battery pack 100 is charged in the system at present. The idle duration for which the apparatus is continuously in the idle state can further reflect the present state of the apparatus. The charger 300a is in the busy state at present, which means that the charging system 1 is in the busy state at present and the battery pack 100 is charged in the system at present. The duration for which the apparatus has continuously worked in the busy state, the number of battery packs 100 or adapters 200a mounted to the apparatus, and the input/output power of the apparatus can further reflect the present state of the apparatus. In some examples, the working state of the electrical energy receiving apparatus 200 such as the adapter 200a includes one or more of the busy state or idle state in which the apparatus is at present, the idle duration for which the apparatus is continuously in the idle state, the duration for which the apparatus has continuously worked in the busy state, the number of lower-level adapters 200a cascaded to the apparatus, the number of battery packs 100 inserted into the apparatus, and the input/output power of the apparatus. The idle state of the electrical energy receiving apparatus 200 such as the adapter 200a means that no battery pack 100 is charged on the apparatus at present. The idle duration for which the apparatus is continuously in the idle state can further reflect the present state of the apparatus. The adapter 200a is in the busy state at present, which means that the battery pack 100 is charged on the apparatus at present. The duration for which the apparatus has continuously worked in the busy state, the number of adapters 200a cascaded to the apparatus, the number of battery packs 100 inserted into the apparatus, and the input/output power of the apparatus can further reflect the present state of the apparatus. In some examples, the working state of the battery pack 100 includes one or more of a fully charged state, a charging state, or a to-be-charged state in which the battery pack 100 is at present, the duration for which the battery pack 100 has been charged, and the remaining charging duration of the battery pack 100. Of course, the working state of the battery pack 100, the adapter 200a, and the charger 300a may further include more information not shown above.

In some examples, the working state of each of the electrical energy receiving apparatus 200 such as the battery pack 100 and the adapter 200a and the electrical energy conversion apparatus 300 such as the charger 300a further includes an emergency. The emergency includes, but is not limited to, the event where the device is powered on/off, the event where the device starts/ends working, a device fault and other alarms, and the event where the battery pack is inserted or removed. In some examples, the emergency of the battery pack 100 includes one or more of the event where the battery pack 100 is inserted into or removed from the adapter 200a, the event where the battery pack 100 starts/ends being charged, and the event where the electric quantity of the battery pack 100 varies by 1%. In some examples, the emergency of the adapter 200a includes one or more of the event where the battery pack 100 is inserted into or removed from the adapter 200a, the event where a certain battery pack 100 on the adapter 200a starts or ends being charged, and the event where another adapter 200a is cascaded to or removed from the adapter 200a. In some examples, the emergency of the charger 300a includes the event where the adapter 200a is electrically connected to or removed from the charger 300a and the like. Of course, the emergency of the battery pack 100, the adapter 200a, and the charger 300a may further include more information not shown above.

The first communication submodule 511, the second communication submodule 512, and the third communication submodule 513 mentioned above may adjust the frequencies of their data interaction with the external device 600 based on the working states of the devices to which the first communication submodule 511, the second communication submodule 512, and the third communication submodule 513 belong. Furthermore, the first communication submodule 511, the second communication submodule 512, and the third communication submodule 513 may adjust the frequencies of their data interaction with the external device 600 based on the working states of other devices in the charging system 1. Specifically, the third communication submodule 513 of the charger 300a may adjust the frequency of the data interaction between the third communication submodule 513 and the external device 600 based on the working state of the battery pack 100 and/or the adapter 200a. The second communication submodule 512 of the adapter 200a may adjust the frequency of the data interaction between the second communication submodule 512 and the external device 600 based on the working state of the battery pack 100 electrically connected to the adapter 200a and/or the working states of upper-level and lower-level adapters 200a cascaded to the adapter 200a. The first communication submodule 511 of the battery pack 100 may adjust the frequency of the data interaction between the first communication submodule 511 and the external device 600 based on the working state of the adapter 200a into which the battery pack 100 is inserted.

It is to be understood that the working states of the battery pack 100, the electrical energy receiving apparatus 200, and the electrical energy conversion apparatus 300 mentioned above are also considered as a kind of data. The communication module 500 of the charging system 1 may form the wired communication link in the charging system 1. The working states of the preceding devices may be transmitted through the wired communication link to other devices in the system, allowing the devices to adjust the frequencies of their data interaction with the external device 600 based on the working states of other devices.

**Table 1**

| Working State | | Interaction Frequency |
|---|---|---|
| Emergency | The event where the device is powered on/off, the event where the device starts/ends working, the device fault and the other alarms, the event where the alternating current/direct current mode of the device is switched, the event where the battery pack is inserted or removed, the event where charging starts/ends, the event where the electric quantity varies by 1%, the event where the adapter is inserted or removed, and the like | Immediate reporting after triggering |
| Normal state | The busy state, the duration for which work has been done, the idle state, the idle duration, the fully charged state, the charging state, the to-be-charged state, the number of mounted adapters/battery packs, the number of cascaded adapters, the duration for which charging has been done, the remaining charging duration, and the like | Periodic reporting with an adjustable frequency |

In some examples, the charging system 1 is configured to perform the data interaction with the external device 600 when any one of the preceding emergencies occurs. Specifically, in response to the occurrence of any emergency of any device in the charging system 1, the device where the emergency occurs or another device responsible for the data transmission of the device immediately uploads the data corresponding to the emergency to the external device 600 so that the emergency is reported in real time when the emergency occurs. In this example, the to-be-transmitted data may be burst data of the charging system 1. The data reported due to the emergency may have a corresponding relationship with the emergency. For example, when the emergency such as the fault alarm occurs, the to-be-transmitted data may be fault information indicating the reason for a fault, and the data to be reported for different emergencies may be predefined. In some examples, in the case where there are to-be-reported data for multiple emergencies, the communication submodule 510 may determine, based on the preset priority of the multiple emergencies, the sequence in which the related data is reported.

In some examples, the Bluetooth submodule 510a, Wi-Fi submodule 510c, or cellular submodule 510d of the battery pack 100 reports corresponding information to the external device 600 in response to the event where the electric quantity of the battery pack 100 varies by 1%, the event where the battery pack 100 ends being charged, or the event where the battery pack 100 is removed from the adapter 200a inserted at present. In other examples, the Bluetooth submodule 510a, Wi-Fi submodule 510c, or cellular submodule 510d of the battery pack 100 reports corresponding information to the external device 600 in response to the fault alarm of the inserted adapter 200a or the event where the charger 300a electrically connected is powered off. In some examples, the Bluetooth submodule 510a, Wi-Fi submodule 510c, or cellular submodule 510d of the adapter 200a reports corresponding information to the external device 600 in response to the event where the battery pack 100 is inserted into or removed from the adapter 200a, the event where the battery pack 100 starts or ends being charged on the adapter 200a, or the event where another adapter 200a is cascaded to or removed from the adapter 200a. In other examples, the Bluetooth submodule 510a, Wi-Fi submodule 510c, or cellular submodule 510d of the adapter 200a reports corresponding information to the external device 600 in response to the event where the electric quantity of the battery pack 100 on the adapter 200a varies by 1%, the event where the charger 300a electrically connected is powered off, or the event where the alternating current/direct current mode of the device is switched. In some examples, the Bluetooth submodule 510a, Wi-Fi submodule 510c, or cellular submodule 510d of the charger 300a reports corresponding information to the external device 600 in response to the event where the charger 300a ends working or the fault alarm of the charger 300a. In other examples, the Bluetooth submodule 510a, Wi-Fi submodule 510c, or cellular submodule 510d of the charger 300a reports corresponding information to the external device 600 in response to the event where a certain battery pack 100 is removed from the adapter 200a inserted at present in the charging system 1 or the event where the battery pack 100 is inserted into/removed from a certain adapter 200a.

In some examples, the charging system 1 is configured to adjust the frequency of the data interaction with the external device 600 based on the idle duration for which the electrical energy conversion apparatus 300 is continuously in the idle state. The frequency of the data interaction may be inversely proportional to the preceding idle duration. That is, the longer the idle duration for which the electrical energy conversion apparatus 300 such as the charger 300a is continuously in the idle state, the longer the duration for which the charging system 1 does not work and no battery pack 100 is charged. Thus, the states of the devices in the charging system 1 change less, and the to-be-transmitted data is less. Therefore, the frequency with which system data is transmitted to the external device 600 can be reduced. The to-be-transmitted data in this example may be routine data periodically reported by the charging system 1. In some examples, the Bluetooth submodule 510a, Wi-Fi submodule 510c, or cellular submodule 510d of the charger 300a may adjust the frequency of the data interaction with the external device 600 based on the idle duration for which the charger 300a is continuously in the idle state. Specifically, multi-level duration thresholds and the frequencies of the data interaction corresponding to the multi-level duration thresholds may be preset. In the case where the idle duration of the charger 300a or the charging system 1 exceeds the duration thresholds level by level, the Bluetooth submodule 510a, the Wi-Fi submodule 510c, or the cellular submodule 510d can reduce the frequency of the data interaction with the external device 600 level by level according to the preceding threshold-frequency relationship. In other examples, the charging system 1 may also be configured to adjust the frequency of the data interaction with the external device 600 based on the duration for which the electrical energy conversion apparatus 300 has continuously worked in the busy state. The frequency of the data interaction may be proportional to the duration for which the electrical energy conversion apparatus 300 has worked. That is, if the duration is longer for which the electrical energy conversion apparatus 300 such as the charger 300a has continuously worked in the busy state, the states of the devices in the charging system 1 change complicatedly and there is a large amount of to-be-transmitted data. Therefore, the frequency with which the system data is transmitted to the external device 600 can be improved. The solutions in the preceding examples can allow the charging system 1 to always perform the data transmission in a manner that does not waste resources such as channels, storage, and electricity and prevents delays in user information perception.

In some examples, the charging system 1 is further configured to adjust the frequency of the data interaction between the communication module 500 and the external device 600 based on an instruction from the external device 600. Specifically, the frequency of the data interaction between each device in the charging system 1 and the external device 600 may be set by the user. In response to a setting operation of the user on the external device 600, the external device 600 may issue a corresponding instruction to the communication module 500 of the charging system 1. In response to the instruction from the external device 600, the communication submodule 510 in the charging system 1 receiving the instruction may correspondingly adjust the frequency of the data interaction between the device or another device in the system and the external device 600.

Following on from the preceding description, in another optional example, the charging combination 10 may exist independently of the charging system 1. The preceding charging combination 10 including the adapter 200a and the battery pack 100 electrically connected to the adapter 200a detachably further includes the communication module 500. This charging combination 10 is configured to perform the data interaction with the frequency adaption with the external device 600 or the electrical energy conversion apparatus 300 (such as the charger 300a, the charging station, or the charging pile) through the preceding communication module 500. In this example, similar to the charging system 1 described above, the communication submodule 510 performing the data interaction with the external device 600 or the charger 300a exists in the communication module 500 of the charging combination 10. The communication submodule 510 may be the first communication submodule 511 of the battery pack 100 and/or the second communication submodule 512 of the adapter 200a. The frequency of the data interaction between the communication submodule 510 and the external device 600 or the charger 300a may be adjusted based on the working state of each of one or more devices in the charging combination 10, including but not limited to, adjusting a data sending/response frequency and requiring the peer to adjust the data sending/response frequency. In some examples, the communication submodule 510 in the charging combination 10 performs the data interaction with the external device 600 or the Bluetooth gateway submodule 510b of the charger 300a through the Bluetooth submodule 510a. Alternatively, the communication submodule 510 in the charging combination 10 performs the data interaction with the external device 600 through the Wi-Fi submodule 510c or the cellular submodule 510d. In response to the occurrence of an emergency in the charging combination 10, the communication submodule 510 may immediately report the information corresponding to the emergency to the external device 600. In response to an increase in the idle duration for which the adapter 200a in the charging combination 10 is continuously in the idle state, the communication submodule 510 may reduce the frequency with which routine data is transmitted to the external device 600. Unless there is any conflict, for the specific contents involved in the examples, reference may be made to the preceding description of the charging system 1.

Following on from the preceding description, in another optional example, the battery pack 100 may exist independently from the charging system 1 or the charging combination 10. The preceding battery pack 100 including the battery pack housing 110, the cell units 120, and the terminal assembly 130 further includes the communication module 500, that is, the first communication submodule 511. This battery pack 100 is configured to perform the data interaction with the frequency adaption with one or more of the external device 600, the charger 300a, and the adapter 200a through the preceding communication module 500. In this example, similar to the charging system 1 and the charging combination 10 described above, the first communication submodule 511 of the battery pack 100 may perform the data interaction with the external device 600, the charger 300a, or the adapter 200a. The frequency of the data interaction between the two may be adjusted based on the working state of the battery pack 100. Specifically, in response to the occurrence of an emergency in the battery pack 100, the first communication submodule 511 may immediately report corresponding information to the external device 600. In response to an increase in the duration for which the battery pack 100 is continuously in the fully charged state, the first communication submodule 511 may reduce the frequency with which routine data is transmitted to the external device 600. Unless there is any conflict, for the specific contents involved in the examples, reference may be made to the preceding description of the charging system 1.

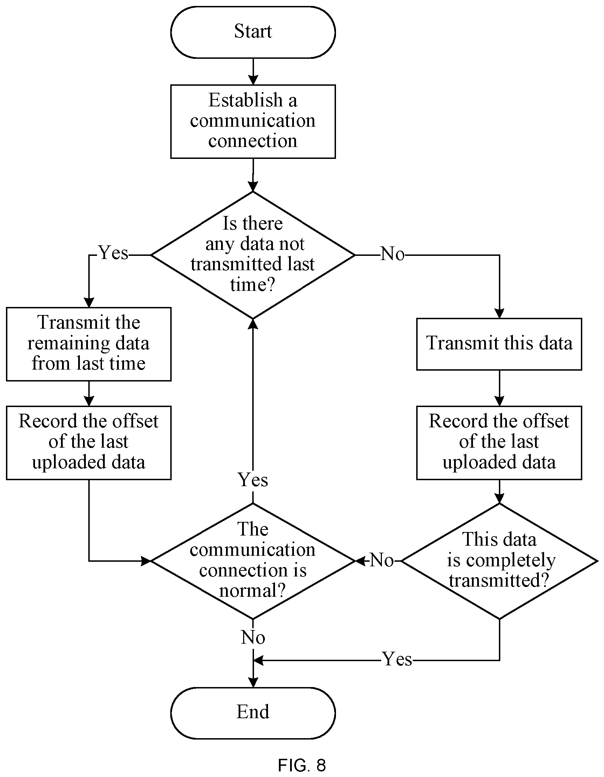

In an optional example, referring to FIGS. 1 and 8, the preceding charging system 1 including the electrical energy conversion apparatus 300 and the multiple electrical energy receiving apparatuses 200 connected in cascade further includes the communication module 500. The charging system 1 is configured to charge the battery pack 100 electrically connected to the electrical energy receiving apparatus 200 in the system and is further configured to establish the communication connection with the external device 600 through the preceding communication module 500 to implement the data interaction with the external device 600. In this example, to reduce the system power consumption and improve the data transmission efficiency, for the data interaction in the charging system 1 and the data interaction between the charging system 1 and the external device 600, after communication is interrupted and restored, a transmission task uncompleted before the interruption may be continued instead of retransmitting all data. The communication module 500 of the charging system 1 includes a storage unit 540. Consistent with naming in the preceding description, if the first communication submodule 511 of the battery pack 100 includes a storage unit 540, the storage unit 540 is referred to as a first storage unit, if the second communication submodule 512 of the electrical energy receiving apparatus 200 or the adapter 200a includes a storage unit 540, the storage unit 540 is referred to as a second storage unit, and if the third communication submodule 513 of the electrical energy conversion apparatus 300 or the charger 300a includes a storage unit 540, the storage unit 540 is referred to as a third storage unit. In the charging system 1 and/or between the charging system 1 and the external device 600, the wireless communication link is formed for transmitting data. During a data transmission task performed on this wireless communication link, the data untransmitted at present may be retained in the storage unit 540 of the corresponding communication submodule 510 when the wireless communication link is interrupted. The communication module 500 continues the data transmission uncompleted before the link interruption after the wireless communication link is restored. It is to be noted that in this example, the data sender can continue the data transmission uncompleted before the interruption after the link is interrupted and restored, instead of retransmitting the data that has been transmitted before the interruption. Similarly, the data receiver also can continue receiving data not received before the interruption after the link is interrupted and restored, and the retransmission of the data that has been transmitted before the interruption is not required. In some examples, the data receiver may also integrate the data received before and after the link interruption, respectively. It is to be understood that this example mainly involves the wireless communication.

Through one or more of the Bluetooth submodule 510a, the Bluetooth gateway submodule 510b, the Wi-Fi submodule 510c, and the cellular submodule 510d, the communication submodule 510 of the charging system 1 may perform data interaction in the system and/or data interaction inside and outside the system, where for the data interaction, the transmission can be continued after the link is interrupted and restored. The data interaction includes, but is not limited to, the data interaction and continued transmission after the interruption in the system between the first communication submodule 511 or the second communication submodule 512 and the third communication submodule 513, and the data interaction and continued transmission after the interruption inside and outside the system between one or more of the first communication submodule 511, the second communication submodule 512, and the third communication submodule 513 and the external device 600. The to-be-transmitted data of the communication submodule 510 may include only the data of the device where the communication submodule 510 is located or may include data of other devices in the charging system 1. The data of the other devices may be relayed to this communication submodule 510 through the wired communication link. Specifically, during a data transmission task, the data sender and the data receiver have established a wireless communication link. When transmitting data to the data receiver, the data sender uses an identifier such as an offset to indicate the boundary between the data that has been transmitted and the data that is not transmitted among data to be transmitted this time. The identifier such as the offset is updated after it is confirmed that a data segment has been successfully received by the peer. During the data transmission, the data sender and the data receiver may also perform interaction on the identifier such as the offset to ensure the consistency of the data sender and the data receiver in sending and receiving the data. When the wireless communication link is interrupted, among the data to be transmitted this time, at least the untransmitted data from the position indicated by the identifier such as the offset at present is retained in the storage unit 540 of the communication submodule 510 of the data sender. Correspondingly, the data that has been successfully transmitted is also retained in the storage unit 540 of the data receiver. After the wireless communication link is restored, based on the preceding identifier such as the offset, the data sender may continue the transmission task uncompleted before the interruption. Among the data to be transmitted this time, the untransmitted data from the position indicated by the identifier such as the offset at present is transmitted to the data receiver so that the data receiver obtains all the data to be transmitted in this task. In the process, the data to be transmitted may be sent and received in sequence and is not disarranged, compared with the original data.

In some examples, as shown in FIG. 8, using the communication submodule 510 acting as the data sender as an example, the communication submodule 510 has the storage unit 540. Before each data transmission, it is first confirmed whether the previous data transmission task is fully completed. If so, this data transmission task starts being performed, and the data to be transmitted in this task in the storage unit 540 is transmitted based on the offset identifier. If not, the data untransmitted in the previous task and retained in the storage unit 540 is transmitted continuously based on the offset identifier, and the offset identifier is dynamically updated until the data transmission in the previous task is completed.

In other examples, before transmitting the data to the peer, the data sender divides the data to be transmitted in this task into blocks or pieces. The data transmission may be performed in the unit of a data block or a data piece. When transmitting the data to the data receiver, the data sender uses an identifier such as a bitmap to indicate whether the transmission of data blocks or data pieces in this task has been completed. The identifier such as the bitmap is updated only after it is confirmed that a data block or a data piece has been successfully received by the peer. When the wireless communication link is interrupted, among the data to be transmitted this time, at least the untransmitted data block or data piece indicated by the identifier such as the bitmap is retained in the storage unit 540 of the data sender. Correspondingly, the data that has been successfully transmitted is also retained in the storage unit 540 of the data receiver. After the wireless communication link is restored, based on the preceding identifier such as the bitmap, the data sender may continue the transmission task uncompleted before the interruption. Among the data to be transmitted this time, the untransmitted data block or data piece indicated by the identifier such as the bitmap is transmitted to the data receiver so that the data receiver obtains all the data in this task. In the process, the data to be transmitted may be sent and received out of sequence and may be disarranged, compared with the original data.

In some examples, the data sender clears the data in the storage unit 540 only after all the data to be transmitted in this task has been transmitted. In some examples, in the case where the wireless communication link is restored within a limited duration after the interruption, the data sender continues the data transmission uncompleted before the link interruption, and in the case where the wireless communication link is not restored within the limited duration after the interruption, the data sender does not continue the data transmission uncompleted before the link interruption or retransmits all the to-be-transmitted data of the data transmission task uncompleted before the link interruption.

In some examples, when the link is interrupted, the communication submodule 510 of the data sender may store the fault information corresponding to this link interruption in the storage unit 540. After the link is restored, the communication submodule 510 transmits the fault information to the peer for notification or confirmation. The fault information may also be transmitted to the external device 600 such as the cloud server for recording, analysis, and the like. It is to be noted that the link interruption and the fault information corresponding to the link interruption here include not only the interruption of the wireless communication link such as a Bluetooth disconnection but also the interruption of the wired link such as a bus disconnection.

In some examples, the communication submodule 510 that can continue the transmission after the preceding link is interrupted and restored is the Bluetooth submodule 510a in each of the one or more battery packs 100 in the charging system 1, and this Bluetooth submodule 510a has the first storage unit 540. Additionally/alternatively, the communication submodule 510 that can continue the transmission after the preceding link is interrupted and restored is the Bluetooth submodule 510a in each of the one or more adapters 200a in the charging system 1, and this Bluetooth submodule 510a has the second storage unit 540. Additionally/alternatively, the communication submodule 510 that can continue the transmission after the preceding link is interrupted and restored is the Bluetooth submodule 510a in the charger 300a in the charging system 1, and this Bluetooth submodule 510a has the third storage unit 540. In some examples, the communication submodule 510 that can continue the transmission after the preceding link is interrupted and restored is the Wi-Fi submodule 510c or the cellular submodule 510d in the charger 300a in the charging system 1, and this Wi-Fi submodule 510c or this cellular submodule 510d has the third storage unit 540.

Following on from the preceding description, in another optional example, the charging combination 10 may exist independently of the charging system 1. The preceding charging combination 10 including the adapter 200a and the battery pack 100 electrically connected to the adapter 200a detachably further includes the communication module 500. The charging combination 10 is configured to charge the battery pack 100 electrically connected to the adapter 200a and is also configured to perform the data interaction with the external device 600 or the electrical energy conversion apparatus 300 (the charger 300a, the charging station, or the charging pile) through the preceding communication module 500, where for the data interaction, the transmission can be continued after the wireless communication link is interrupted and restored. In this example, similar to the charging system 1 described above, the first communication submodule 511 of the battery pack 100 includes the first storage unit 540, and/or the second communication submodule 512 of the adapter 200a includes the second storage unit 540. The first communication submodule 511 and/or the second communication submodule 512 establish the wireless communication link with the third communication submodule 513 of the charger 300a or the external device 600. In a data transmission task performed on this wireless communication link, the data untransmitted at present is retained in the storage unit 540 of the corresponding communication submodule 510 when the wireless communication link is interrupted. After the wireless communication link is restored, the first communication submodule 511 or the second communication submodule 512 continues transmitting the data untransmitted before the link interruption and retained in the storage unit 540. In some examples, the first communication submodule 511 and/or the second communication submodule 512 use the offset identifier, the bitmap identifier, or the like to indicate the data untransmitted before the wireless communication link is interrupted. In some examples, in the case where the wireless communication link is restored within the limited duration after the interruption, the first communication submodule 511 and/or the second communication submodule 512 continue the data transmission uncompleted before the link interruption. In some examples, the Bluetooth submodule 510a, the Wi-Fi submodule 510c, or the cellular submodule 510d in the first communication submodule 511 and/or the second communication submodule 512 may perform the preceding solution for continued data transmission. Unless there is any conflict, for the specific contents involved in the examples, reference may be made to the preceding description of the charging system 1.

Following on from the preceding description, in another optional example, the battery pack 100 may exist independently from the charging system 1 or the charging combination 10. The preceding battery pack 100 including the battery pack housing 110, the cell units 120, and the terminal assembly 130 further includes the communication module 500, that is, the first communication module 500. This battery pack 100 is configured to perform the data interaction with the external device 600 and/or the charger 300a and the adapter 200a through the preceding communication module 500, where for the data interaction, the transmission can be continued after the link is interrupted and restored. In this example, similar to the charging system 1 and the charging combination 10 described above, the first communication submodule 511 of the battery pack 100 includes the first storage unit 540. The first communication submodule 511 establishes the wireless communication link with the third communication submodule 513 of the charger 300a, the second communication submodule 512 of the adapter 200a, or the external device. In a data transmission task performed on this wireless communication link, the data untransmitted at present is retained in the first storage unit 540 when the wireless communication link is interrupted. After the wireless communication link is restored, the first communication submodule 511 continues transmitting the data untransmitted before the link interruption and retained in the storage unit 540. In some examples, the first communication submodule 511 uses the offset identifier, the bitmap identifier, or the like to indicate the data untransmitted before the wireless communication link is interrupted. In some examples, in the case where the wireless communication link is restored within the limited duration after the interruption, the first communication submodule 511 continues the data transmission uncompleted before the link interruption. In some examples, the Bluetooth submodule 510a, the Wi-Fi submodule 510c, or the cellular submodule 510d in the first communication submodule 511 may perform the preceding solution for continued data transmission. Unless there is any conflict, for the specific contents involved in the examples, reference may be made to the preceding description of the charging system 1.

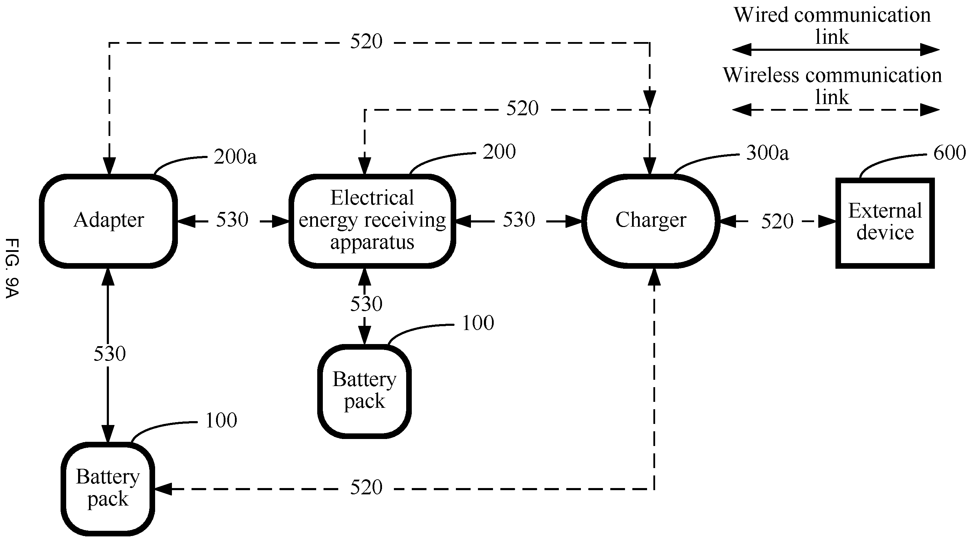

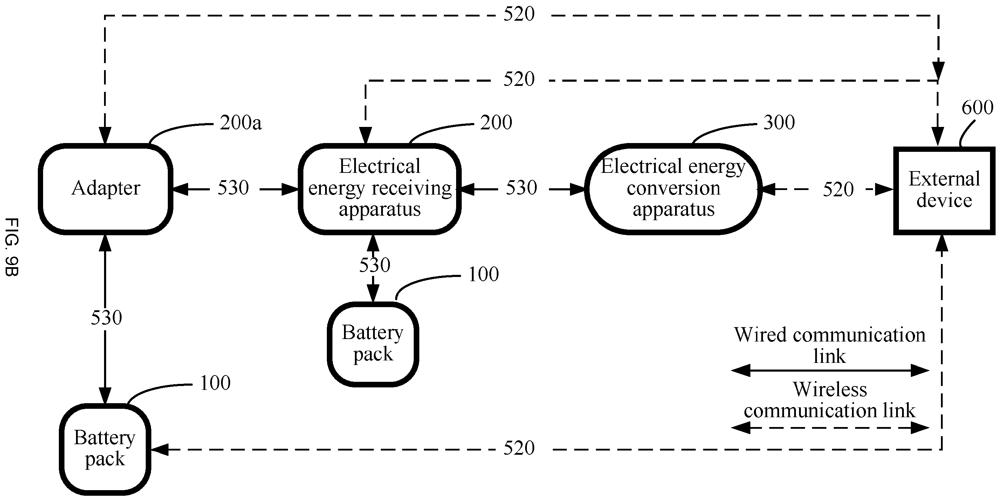

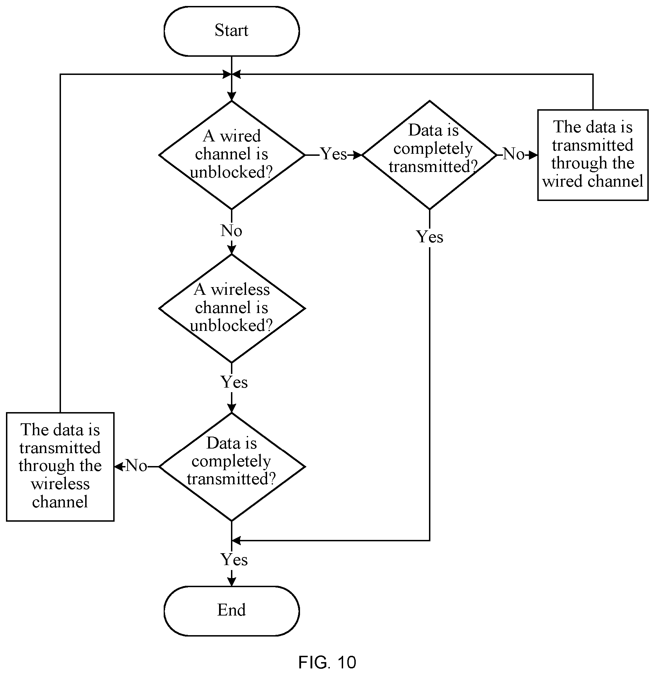

In an optional example, referring to FIG. 1 and FIGS. 9A to 10, the preceding charging system 1 including the electrical energy conversion apparatus 300 and the multiple electrical energy receiving apparatuses 200 connected in cascade further includes the communication module 500. The charging system 1 is configured to charge the battery pack 100 electrically connected to the electrical energy receiving apparatus 200 in the system and is further configured to establish the communication connection with the external device 600 through the preceding communication module 500 to implement the data interaction with the external device 600. In this example, to ensure stable and reliable data transmission of the system, the data interaction within the charging system 1 and/or between the charging system 1 and the external device 600 involve two types of channels: the wireless communication link 520 and the wired communication link 530. The communication module 500 may use the two links or choose one of the two links for the data interaction. The wired communication link 530 may be implemented through a bus, an interface, a connecting wire/cable, or the like. In some examples, the wired communication link 530 is mainly an RS485 bus, a CAN bus, or the like. The wireless communication link 520 may include, but is not limited to, Bluetooth, Wi-Fi, and a cellular manner. Whether the wired communication link 530 or the wireless communication link 520 is used, the transmission of one piece of data may involve other devices as relays in addition to the data sender and the data receiver. The link path of the wired communication link 530 may be determined by the electrical connection relationship between the battery pack 100 and the electrical energy receiving apparatus 200 in the charging system 1 and the cascading relationship of the electrical energy receiving apparatus 200. The wireless communication link 520 may be a point-to-point connection involving no relay or may involve a relay due to reasons such as protocol conversion. It is to be understood that the link path of the preceding wired communication link 530 and the link path of the preceding wireless communication link 520 are source-to-destination link paths. Each of the link paths may be a path with two nodes directly connected by one edge in the case where no relay is involved or may be a path with more nodes connected by multiple edges in the case where the relay is involved.

First, description is made to the case where the communication module 500 of the charging system 1 uses the preceding two types of channels for the data interaction, that is, the communication module 500 is configured to perform the data transmission simultaneously through the wired communication link 530 and the wireless communication link 520. Since the data interaction on the wired communication link 530 in the charging system 1 is mainly performed in the system, the preceding parallel data transmission process at least partially involves the data transmission in the charging system 1. However, it is not excluded that the external device 600 also performs the wired communication with the charging system 1.

In some examples, during the data interaction in the charging system 1, the sender and the receiver each belong to the system. The sender and the receiver may be any two of the first, second, and third communication submodules 510 in the charging system 1. The communication submodule 510 as the data sender can transmit the to-be-transmitted data in the manners described below. Firstly, through the wired communication link 530, the to-be-transmitted data is transmitted to the communication submodule 510 of the data receiver according to the electrical connection relationship between the battery pack 100 and the electrical energy receiving apparatus 200 and the cascading relationship of the electrical energy receiving apparatus 200. Secondly, through the wireless communication link 520, the to-be-transmitted data is directly transmitted to the communication submodule 510 of the data receiver. Specifically, the first communication submodule 511 of the battery pack 100 may transmit the to-be-transmitted data thereof through the wired communication link 530 from the battery pack 100 to the adapter 200a into which the battery pack 100 is inserted, or further transmit the to-be-transmitted data to another adapter 200a to which this adapter 200a is cascaded, or further transmit the to-be-transmitted data to the charger 300a. The first communication submodule 511 may simultaneously transmit the to-be-transmitted data thereof through the wireless communication link 520 directly to the adapter 200a or the charger 300a. The second communication submodule 512 of the adapter 200a may transmit the to-be-transmitted data thereof through the wired communication link 530 from the adapter 200a to the battery pack 100 inserted into the adapter 200a, or transmit the to-be-transmitted data to another adapter 200a to which this adapter 200a is cascaded, or transmit the to-be-transmitted data to the charger 300a. The second communication submodule 512 may simultaneously transmit the to-be-transmitted data thereof through the wireless communication link 520 directly to the battery pack 100, the adapter 200a, or the charger 300a. The identity of the data sender and the identity of the data receiver are exchangeable. Therefore, the reverse data interaction process can be analogized, and the details are not repeated.

In some examples, during the data interaction in the charging system 1, one of the sender and the receiver belongs to the system, and the other is the external device 600. The external device 600 may not perform the wired communication with the charging system 1. In the case where a communication submodule 510 that cannot be directly connected to the external device 600 through the wireless communication exists in the charging system 1, at least one communication submodule 510 that can be connected to the external device 600 through the wireless communication exists in the system and is referred to as a relay communication submodule. The to-be-transmitted data of the communication submodule 510 that cannot be directly connected to the external device 600 may reach the preceding relay communication submodule through the wireless communication link 520 and/or the wired communication link 530 in the system and then is relayed to the external device 600 by the preceding relay communication submodule. Therefore, in this example, the data interaction between the external device 600 and the device in the charging system 1 may include more than one of the data interaction between the device in the system and the relay communication submodule through the wired communication, the data interaction between the device in the system and the relay communication submodule through the wireless communication, the data interaction between the relay communication submodule and the external device 600 through the wireless communication, and the data interaction between the communication submodule 510 as the data sender or the data receiver and the external device 600 through the wireless communication. In some examples, the preceding relay communication submodule may be the Wi-Fi submodule 510c or the cellular submodule 510d. In some examples, the device where the preceding relay communication submodule is located also includes the Bluetooth gateway submodule 510b to communicate wirelessly with the Bluetooth submodule 510a of another device in the charging system 1.

Specifically, for example, the third communication submodule 513 of the charger 300a is the relay communication submodule. The first communication submodule 511 of the battery pack 100 may transmit, through the wired communication link 530, the to-be-transmitted data thereof from the battery pack 100 to the adapter 200a into which the battery pack 100 is inserted, transmit the to-be-transmitted data to another adapter 200a to which the adapter 200a is cascaded, and further transmit the to-be-transmitted data to the charger 300a. Then, the third communication submodule 513 of the charger 300a may transmit the to-be-transmitted data of the battery pack 100 to the external device 600 through the wireless communication link 520. At the same time, the first communication submodule 511 may also transmit the to-be-transmitted data thereof to the external device 600 through the wireless communication link 520. Alternatively, at the same time, the first communication submodule 511 may also transmit the to-be-transmitted data thereof to the charger 300a through the wireless communication link 520, and then, the third communication submodule 513 may transmit the to-be-transmitted data of the battery pack 100 to the external device 600 through the wireless communication link 520. The second communication submodule 512 of the adapter 200a may transmit the to-be-transmitted data thereof to the charger 300a through the wired communication link 530 or may transmit the to-be-transmitted data to another adapter 200a to which the adapter 200a is cascaded and then to the charger 300a. Then, the third communication submodule 513 of the charger 300a may transmit the to-be-transmitted data of the adapter 200a to the external device 600 through the wireless communication link 520. At the same time, the second communication submodule 512 may also transmit the to-be-transmitted data thereof to the external device 600 through the wireless communication link 520. Alternatively, at the same time, the second communication submodule 512 may also transmit the to-be-transmitted data thereof to the charger 300a through the wireless communication link 520, and then the third communication submodule 513 may transmit the to-be-transmitted data of the adapter 200a to the external device 600 through the wireless communication link 520. It is to be understood that the wireless communication link 520 between each of the first and second communication submodules 510 and the external device 600 and the wireless communication link 520 between the third communication submodule 513 and the external device 600 do not need to exist simultaneously. The identity of the data sender and the identity of the data receiver are exchangeable. Therefore, the reverse data interaction process can be analogized, and the details are not repeated. In some examples, the third communication submodule 513 of the electrical energy conversion apparatus 300 or the third communication submodule 513 of the charger 300a includes the relay communication submodule. The relay communication submodule is configured to receive control data from the external device 600 through the wireless communication link 520 and transmit the control data to the corresponding electrical energy receiving apparatus 200 and/or the battery pack 100 through the wired communication link 530. In some examples, the third communication submodule 513 may also transmit the control data to the corresponding electrical energy receiving apparatus 200 and/or the battery pack 100 through the wireless communication link 520.

In the parallel data transmission solution described above, the data sender and the data receiver in pairs perform the interaction on the same data through the two links to ensure the reliability of the data transmission. The data on the two links does not necessarily arrive at the same time. In some examples, the relay integrates multiple pieces of data sent from different data senders but to be sent to the same data receiver. In other examples, the wired communication link 530 of the charging system 1 and the wireless communication link 520 of the charging system 1 may simultaneously transmit different data, thereby improving the utilization of the two types of channels.

Next, description is made to the case where the communication module 500 of the charging system 1 switches and selects the preceding two types of channels, that is, the communication submodule 510 as the data sender is configured to selectively perform the data transmission through one of the wired communication link 530 and the wireless communication link 520 based on the present state of each of the two communication links from the data sender to the data receiver. The data sender generally selects a link before sending the to-be-transmitted data. Factors that may be considered for the selection include link availability, link busyness, link signal strength, and a link interference degree. The data sender prioritizes a normal and available link, a less busy link, a link with a stronger effective signal, and a link with weaker noise interference. In some examples, the wired communication link, which is more reliable, is prioritized during the data transmission. When the wired communication link is interrupted, abnormal, or busy, the wireless communication link is used. In some examples, if the state of one of the two links changes suddenly during the data transmission, the data sender may switch from the present link to the other link to continue the uncompleted data transmission.

In some examples, the data sender may be the initial sender of a piece of data, and the data receiver may be the final receiver of the piece of data. The data sender selects between the two links from the initial sender to the final receiver based on a global link state. Once the initial sender makes a decision, a relay sender does not change the selected link path. For example, assuming that the battery pack 100 in the charging system 1 has the data to be transmitted to the charger 300a, the battery pack 100 has two global links. One is the wired communication link 530 from the battery pack 100 to the charger 300a through the cascaded adapter 200a, and the other is the wireless communication link 520 from the battery pack 100 to the charger 300a. If the battery pack 100 selects the wired communication link 530 based on the link state, the data reaches an adapter 200a, and then the communication submodule 510 of the adapter 200a senses that the wired communication link 530 between the adapter 200a and the charger 300a is disconnected, the adapter 200a waits for the battery pack 100 to switch to the wireless communication link 520 from the battery pack 100 to the charger 300a based on the change of the global link state, and the adapter 200a does not need to switch to the wireless communication link 520 from the adapter 200a to the charger 300a.

In other examples, the data sender may be a relay sender of a piece of data, and the data receiver may be a relay receiver of the piece of data or the final receiver of the piece of data. The data sender selects between the two links from the relay sender to the next relay receiver or the final receiver based on a local link state. In the case where the next relay receiver is not the final receiver, the relay receiver decides the communication mode of the next link again as the data sender of the next link after the data arrives. Each relay sender has the right to decide the communication mode of a link with itself as the source. In some examples, the initial sender may still select a link based on the global link state. In the case where the relay sender exists in the global link, the relay sender may reselect a link based on the link state of the relay sender, and the relay sender may change the link selected by the initial sender. Based on the preceding example, if the battery pack 100 selects the wired communication link 530 from the battery pack 100 to the charger 300a through the cascaded adapter 200a based on the link state, the data reaches an adapter 200a, and then the communication submodule 510 of the adapter 200a makes a decision again based on the state of each of the wired and wireless links from the adapter 200a to the charger 300a. If the adapter 200a senses that the wired communication link 530 between the adapter 200a and the charger 300a is disconnected, the adapter 200a may switch to the wireless communication link 520 from the adapter 200a to the charger 300a and does not need to wait for the battery pack 100 to switch based on the change of the global link state.

In some examples, in the case where the data transmission is not direct, when the piece of data is relayed through a device along the link path of the wired communication link 530 or the link path of the wireless communication link 520, the communication submodule 510 of the device adds the corresponding device identifier to the data. When the data finally reaches the data receiver, the device identifier string carried in the data can indicate the actual link path in the transmission process of the data. Specifically, the first communication submodule 511 of the battery pack 100 as the data sender adds the device identifier of the battery pack 100 to the to-be-transmitted data at the beginning of the transmission. Then, the first communication module 500 transmits the to-be-transmitted data to the second communication submodule 512 of the adapter 200a into which the battery pack 100 is inserted. The communication between the two may be based on the bus or may be based on Bluetooth and a Bluetooth gateway. The second communication submodule 512 adds the device identifier of the adapter 200a to the data and then transmits, according to the cascading relationship in the charging system 1, the data to another adapter 200a to which the adapter 200a is cascaded or the charger 300a. The adapter 200a or the charger 300a continues adding the device identifier to the data. In some examples, the preceding device identifier may be the MAC address of the device, a uniformly predefined identifier or identification code ID, or the like. In the preceding example, the actual link path of the data transmission is clearly recorded, and the external device such as the cloud can position a device connection relationship based on this. In addition, it is easy to implement the analysis and diagnosis of various faults of the charging system.

In some examples, the wired communication link 530 such as the RS485 bus in the charging system 1 is configured to transmit data related to charging control, that is, data inherent to the charging system 1. The transmission of the data is performed under a charging control protocol. Additionally, the wired communication link 530 is also configured to transmit data related to an Internet of Things (IoT) function. The transmission of the data is performed under a corresponding IoT protocol. For the bus link, the charging control data and the charging control protocol are necessary while the IoT data and the IoT protocol are optional.

Following on from the preceding description, in another optional example, the charging combination 10 may exist independently of the charging system 1. The preceding charging combination 10 including the adapter 200a and the battery pack 100 electrically connected to the adapter 200a detachably further includes the communication module 500. The charging combination 10 is configured to charge the battery pack 100 electrically connected to the adapter 200a and is also configured to perform the data interaction with the external device 600 and/or the electrical energy conversion apparatus 300 (the charger 300a, the charging station, or the charging pile) through the preceding communication module 500, where the data interaction is performed through both the wired communication link 530 and the wireless communication link 520 or one of the wired communication link 530 and the wireless communication link 520. In this example, similar to the charging system 1 described above, the charging combination 10 is one of the sender and the receiver of the data interaction while the external device 600 or the charger 300a is the other of the sender and the receiver. The wired communication link 530 based on the electrical connection relationship between the battery pack 100 and the adapter 200a and the cascading relationship of the adapter 200a and the wireless communication link 520 directly connected or having another device as a relay may be formed between the two. For example, the first communication submodule 511 of the battery pack 100 or the second communication submodule 512 of the adapter 200a is the data sender. The first communication submodule 511 or the second communication submodule 512 may simultaneously use both the preceding wired communication link 530 and the preceding wireless communication link 520 to transmit the same data to the external device 600 or the charger 300a in parallel so that data redundancy and reliability are enhanced. The first communication submodule 511 or the second communication submodule 512 may select one of the wired communication link 530 and the wireless communication link 520 based on the link state to perform the data transmission so that the data transmission efficiency is improved. Multiple communication submodules 510 may also use both the preceding wired communication link 530 and the preceding wireless communication link 520 simultaneously to transmit different data respectively so that the data transmission efficiency is improved. In some examples, the wireless communication link 520 is established by the Bluetooth submodule 510a in the first communication submodule 511 or the second communication submodule 512, and the wired communication link 530 may be established based on the RS485 bus by the first communication submodule 511 or the second communication submodule 512. In other examples, the wireless communication link 520 is established by the Wi-Fi submodule 510c or the cellular submodule 510d in the first communication submodule 511 or the second communication submodule 512. Unless there is any conflict, for the specific contents involved in the examples, reference may be made to the preceding description of the charging system 1.

Following on from the preceding description, in another optional example, the battery pack 100 may exist independently from the charging system 1 or the charging combination 10. The preceding battery pack 100 including the battery pack housing 110, the cell units 120, and the terminal assembly 130 also includes the communication module 500, that is, the first communication submodule 511. This battery pack 100 is configured to perform the data interaction with the external device 600 and/or the charger 300a and the adapter 200a through the preceding communication module 500, where the data interaction is performed through both the wired communication link 530 and the wireless communication link 520 or one of the wired communication link 530 and the wireless communication link 520. In this example, similar to the charging system 1 and the charging combination 10 described above, the battery pack 100 is one of the sender and the receiver of the data interaction while the external device 600 or the charger 300a or the adapter 200a is the other of the sender and the receiver. The wired communication link 530 based on the electrical connection relationship between the battery pack 100 and the adapter 200a and the cascading relationship of the adapter 200a and the wireless communication link 520 directly connected or having another device as a relay may be formed between the sender and the receiver. For example, the first communication submodule 511 of the battery pack 100 is the data sender. The first communication submodule 511 may simultaneously use both the preceding wired communication link 530 and the preceding wireless communication link 520 to transmit the same data to the external device 600, the charger 300a, or the adapter 200a in parallel so that the data redundancy and reliability are enhanced. The first communication submodule 511 may select one of the wired communication link 530 and the wireless communication link 520 based on the link state to perform the data transmission so that the data transmission efficiency is improved. In some examples, the wireless communication link 520 is established by the Bluetooth submodule 510a in the first communication submodule 511, and the wired communication link 530 is established based on the RS485 bus by the first communication submodule 511. In other examples, the wireless communication link 520 is established by the Wi-Fi submodule 510c or the cellular submodule 510d in the first communication submodule 511. Unless there is any conflict, for the specific contents involved in the examples, reference may be made to the preceding description of the charging system 1.

It is to be understood that in the preceding description, it is exemplarily illustrated that the charging system 1, the charging combination 10, and the battery pack 100 perform the wireless communication mainly in the Bluetooth, Wi-Fi, and cellular manners. However, it is not excluded that the charging system 1, the charging combination 10, and the battery pack 100 implement the wireless communication in other manners. For example, NFC and Zigbee may be involved.

For the charging system 1 mentioned above, to perform timely and effective charging management on the charging system 1 and improve related human-computer interaction experience, in an optional example, the present application further proposes a management system 2 of the charging system 1. The management system 2 includes the charging system 1 and the external device 600. Following on from the preceding description, the charging system 1 includes at least one electrical energy conversion apparatus 300 and the multiple electrical energy receiving apparatuses 200 connected in cascade and also includes the communication module 500. The charging system 1 is configured to charge the battery pack 100 electrically connected to the electrical energy receiving apparatus 200 and is also configured to establish the communication connection and perform the data interaction with the external device 600 through the communication module 500.

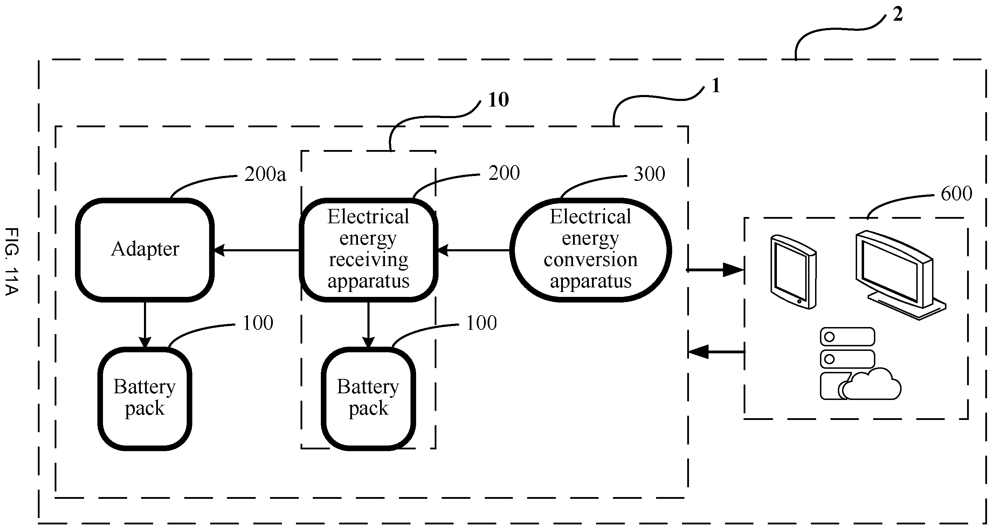

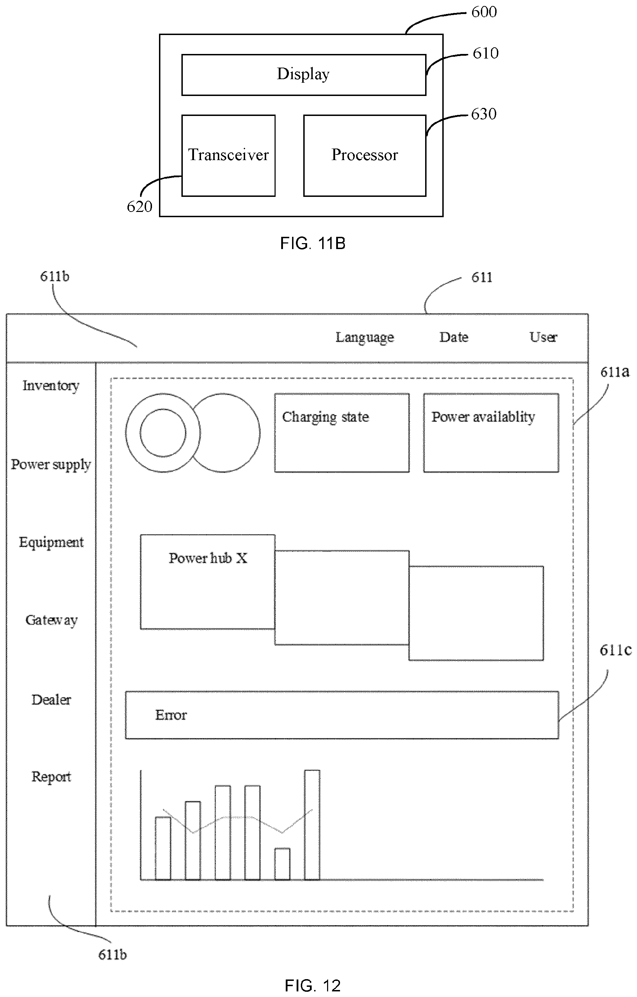

Referring to FIGS. 11 to 13, the external device 600 in the management system 2 includes at least a transceiver 620 and a display 610. The transceiver 620 may include one or more of the Bluetooth gateway submodule 510b, the Wi-Fi submodule 510c, and the cellular submodule 510d. The transceiver 620 can establish a connection with the communication module 500 in the charging system 1 through the wireless communication to receive state data of the charging system 1. The display 610 may include a display screen and related circuits. The display 610 has a main interface 611 where the preceding state data may be displayed. Typically, the content display of the main interface 611 is controlled by a processor 630 in the external device 600. In this example, the main interface 611 simultaneously displays at least state data of the battery pack 100 and state data of the electrical energy conversion apparatus 300 in the charging system 1. Furthermore, the main interface 611 may simultaneously display the state data of the battery pack 100, state data of the electrical energy receiving apparatus 200, and the state data of the electrical energy conversion apparatus 300. Additionally, the main interface 611 also displays fault information of the charging system 1 simultaneously. In some examples, the preceding external device 600 may be the user device, including but not limited to, a mobile phone, a tablet computer, a notebook computer, or a smart wearable device. The preceding state data may be displayed and viewed through an application or a mini app running on the external device 600. In other examples, the external device 600 may be the cloud server. Management personnel may log into the cloud to view the state data.

In this example, the user or a worker may view a charging condition of the charging system 1 through the main interface 611 of the display 610 of the external device 600. Here, the overall condition of the system can be viewed, and the condition of a single device in the system can also be viewed. Relevant personnel can obtain information such as the charging progress and charging capacity of the overall system or the single device. Then, it is determined whether the related charging task can be completed within the day or how long it will take to complete the related charging task, and it is determined whether the present charging capacity meets work requirements to avoid power shortages or outages during outdoor work. Additionally, the charging condition is viewed or collected historical charging conditions are further viewed such that the amount of consumed electricity, an electricity consumption period, and the like for the following day can be estimated manually or through the operation by a program of the external device 600. Then, a future charging task can be planned so that a period with a low electricity price is used and work density is arranged reasonably when a charging plan is formulated. In some scenarios, the worker may also check and determine whether the number of various battery packs 100 and the number of various adapters 200 in the charging system 1 are appropriate and make corresponding adjustments. The user or the worker may also view a fault condition of the charging system 1 and the number of cycles and the maximum recoverable capacity of each battery pack 100 through the main interface 611 of the display 610 of the external device 600. Thus, a faulty or aging device is repaired or replaced in time.

Referring to Table 2, the state data of the electrical energy conversion apparatus 300 displayed on the main interface 611 includes one or more of the time when the charging system 1 starts working, the duration for which the charging system 1 has worked, and the remaining working duration of the charging system 1. The state data of the battery pack 100 displayed on the main interface 611 includes the number of battery packs 100 in the charging system 1 and a real-time charging progress of the charging system 1. The real-time charging progress of the charging system 1 includes the number of battery packs 100 in the system that are fully charged, the number of battery packs 100 in the system that are being charged, and the number of battery packs 100 in the system that are to be charged. It is to be understood that the number of battery packs 100 in the charging system 1 and the number of battery packs 100 in each of different charging states may also be considered as the state data of the electrical energy conversion apparatus 300. Regardless of how the data is categorized, the data is still displayed on the main interface 611 of the display 610 of the external device 600. In addition, the state data of the battery pack 100 may also include the number of battery packs 100 of each of various types in the charging system 1. Alternatively, different types of battery packs 100 may have different state data. For example, the main interface 611 may display the number of battery packs 100 with the Bluetooth function and the charging state of each battery pack 100 without the Bluetooth function.

In some examples, the charging system 1 is adaptable to both new and old battery packs 100. The old battery pack 100 does not have the Bluetooth function while the new battery pack 100 has the Bluetooth function. The charging system 1 is configured to identify the preceding new and old battery packs 100 and report the relevant information to the external device 600. For example, the charger 300a may report the identified old battery pack 100, the adapter 200a electrically connected to the identified old battery pack 100, and the interface of the adapter 200a to the external device 600. The main interface 611 of the external device 600 may display the information of each of the two types of battery packs 100 separately. Specifically, after the battery pack 100 is electrically connected to the electrical energy receiving apparatus 200 such as the adapter 200a, the adapter 200a or the charger 300a can determine, based on the information on which the battery pack 100 and the adapter 200a or the charger 300a perform interaction, whether the battery pack 100 is the new or old battery pack 100. In some examples, the adapter 200a or the charger 300a may determine, based on an information format, whether the battery pack 100 is the new or old battery pack 100. The information format includes the number of data bits, a data type, and the like. In other examples, the adapter 200a or the charger 300a may determine, based on a field value of a particular field in the information, whether the battery pack 100 is the new or old battery pack 100. For example, the new and old battery packs 100 may have device identifiers with different field values. In some examples, after the preceding new and old battery packs 100 are identified, the relevant information is reported to the external device 600 such as the cloud server.

In some examples, the state data of the electrical energy receiving apparatus 200 includes the number of other electrical energy receiving apparatuses 200 cascaded to this electrical energy receiving apparatus 200, the number of battery packs 100 electrically connected to this electrical energy receiving apparatus 200, and one or more of the time when this electrical energy receiving apparatus 200 starts working, the duration for which this electrical energy receiving apparatus 200 has worked, and the remaining working duration of this electrical energy receiving apparatus 200. In some examples, the information such as the time when the electrical energy conversion apparatus 300 or the electrical energy receiving apparatus 200 starts working and the duration for which the electrical energy conversion apparatus 300 or the electrical energy receiving apparatus 200 has worked refers to the time when the charging system 1 starts working within a preset period and the duration for which the charging system 1 has worked within a preset period and can be periodically refreshed. The data displayed on the main interface 611 is the latest data in a present period. For example, the preceding data may refer to the time when the charger 300a or the adapter 200a starts working on the day, the duration for which the charger 300a or the adapter 200a has worked on the day, and the like.

**Table 2**

| | State Data |
|---|---|
| Electrical energy conversion apparatus or charger | The time when the charging system starts working, the duration for which the charging system has worked, and the remaining working duration of the charging system |
| Battery pack | The number of battery packs in the charging system, the number of battery packs in the charging system that are fully charged, the number of battery packs in the charging system that are being charged, the number of battery packs in the charging system that are to be charged, and the number of battery packs with the Bluetooth function |
| | A real-time SoC of each battery pack, the duration for which each battery pack has been charged, the remaining charging duration of each battery pack, and the charging state of each battery pack without the Bluetooth function |
| Electrical energy receiving apparatus or adapter | The number of lower-level electrical energy receiving apparatuses cascaded to the electrical energy receiving apparatus, the number of battery packs electrically connected to the electrical energy receiving apparatus, the time when the electrical energy receiving apparatus starts working, the duration for which the electrical energy receiving apparatus has worked, and the remaining working duration of the electrical energy receiving apparatus |

In some examples, as shown in FIG. 12, the main interface 611 of the display 610 of the external device 600 includes multiple regions. The multiple regions include at least a running state display region 611a, a fault information display region 611c, and an inventory display region 611b. The regions occupy sections in the main interface 611 that do not overlap. The shape, area, and the like of each region are not specifically limited. The division between different regions may be tangible, for example, the regions are divided with borders. Alternatively, the division between different regions may be intangible. At least the running state of the electrical energy conversion apparatus 300 and the running state of the battery pack 100 in the charging system 1 can be displayed in the running state display region 611a. The running state of the electrical energy conversion apparatus 300 and the running state of the battery pack 100 include at least the state data of the electrical energy conversion apparatus 300 and the state data of the battery pack 100 described above. Various fault information of the charging system 1, including but not limited to, fault information related to the transmission of the electrical energy and the data interaction, can be displayed in the fault information display region 611c. The inventory display region 611b includes a function menu for the user to make a selection. The function menu includes at least user information and device information of the charging system 1. In response to the operation of the user on the inventory display region 611b, the display 610 of the external device 600 can switch from the main interface 611 to another interface. Specifically, in response to the operation of the user on the user information in the inventory display region 611b, the display 610 can switch from the main interface 611 to another interface displaying detailed user information. In response to the operation of the user on the device information in the inventory display region 611b, the display 610 can switch from the main interface 611 to another interface displaying detailed device information of the charging system 1.

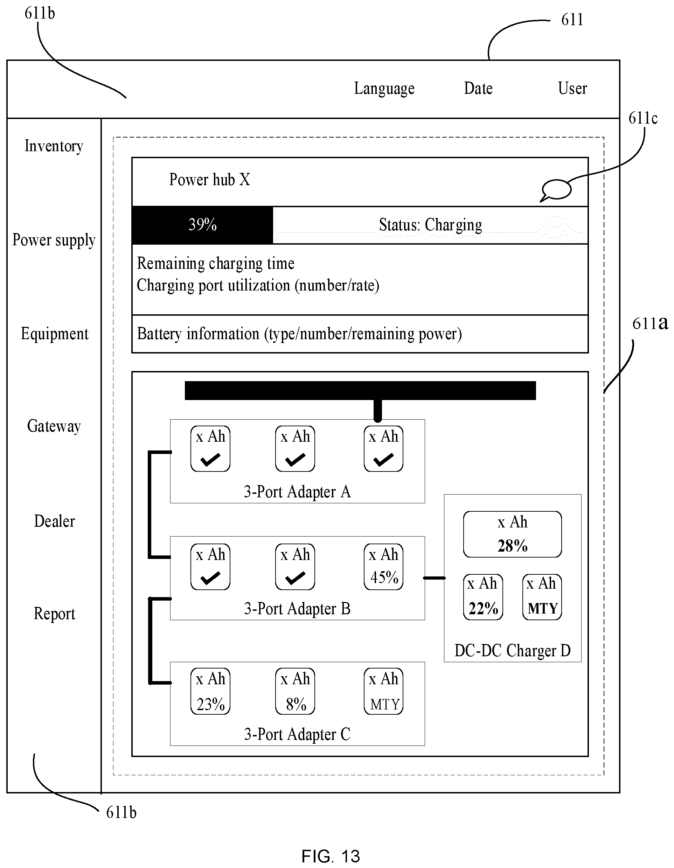

In some examples, as shown in FIG. 13, the main interface 611 of the display 610 of the external device 600 may also display specific cascading relationships and specific electric quantity information (such as the charging state and the SoC) of electrical energy receiving apparatuses 200 under one electrical energy conversion apparatus 300 in the charging system 1 and the battery packs 100 on each of the electrical energy receiving apparatuses 200. When the electrical energy conversion apparatus 300 is considered as a subsystem, the main interface 611 also displays the duration for which the subsystem has worked, the remaining working duration of the subsystem, and the like. In some examples, in the case where the charging system 1 includes multiple electrical energy conversion apparatuses 300, the main interface 611 may display various information of the charging system 1 with the multiple electrical energy conversion apparatuses 300. The main interface 611 may switch, in response to the operation of the user or periodically, to display various information of the subsystem corresponding to each electrical energy conversion apparatus 300 in the charging system 1.

In some examples, each communication submodule 510 in the charging system 1 and other modules on the same device may be powered asynchronously. Specifically, the communication submodules 510 of the battery packs 100 or part of the battery packs 100, the communication submodules 510 of the adapters 200a or part of the adapters 200a, and/or the communication submodules 510 of the chargers 300a or part of the chargers 300a may delay being powered off for a preset duration after the charging and discharging tasks thereof are completed. For example, the first communication submodule 511 of the battery pack 100 such as the Bluetooth submodule 510a may delay being powered off for 12 hours after the battery pack 100 is fully charged in the charging system 1. During these 12 hours, the first communication submodule 511 of the battery pack 100 may still perform data transmission tasks such as uploading data to the external device 600, and other modules in the battery pack 100 may not be powered on during these 12 hours. In some examples, whether each device and the communication submodule of the device in the charging system 1 delay being powered off can be freely set by the user. In response to the operation of the user, the external device 600 may interact with the charging system 1 to specifically control whether each device in the system delays being powered off. In some examples, the charging system 1 is also provided with operation members such as physical buttons, allowing the user to disconnect all the devices in the system through operations such as a long press.

In some examples, in response to the input of the user, the external device 600 may transmit corresponding control data such as various instructions to the charging system 1 through the transceiver 620. After receiving the control data, the charging system 1 adjusts corresponding parameters, including but not limited to, adjusting the frequency of the data interaction or controlling the devices in the system to be powered off.

It is to be noted that the multiple examples described above may be combined for application as long as there is no conflict. For example, the charging system 1 may perform the data transmission in the system or the data transmission inside and outside the system through broadcasting first and connecting later. There is no need to maintain a connection in a disconnected state. However, after the communication connection is established, the offset identifier indicating the starting position of the untransmitted data may be dynamically updated with the real-time process of the data transmission. When the link is interrupted and restored within the limited duration, the data transmission task uncompleted before the link interruption may be continued based on the present offset identifier.

In addition, the present application also describes an outdoor travelling device with the IoT function. The outdoor travelling device is used for working outdoors, for example, a utility vehicle, an agricultural machinery vehicle, a farmer's vehicle, a dune buggy, a golf cart, and a mower. When working outdoors, these devices need to carry some energy storage apparatuses. The energy storage apparatuses of the outdoor travelling device in the related art may be basically divided into two types: energy storage apparatuses using gasoline, diesel, and other fuels, and electrical energy storage apparatuses. The electrical energy storage apparatuses are more environmentally friendly and save more energy than the energy storage apparatuses using fuels and thus are more attractive to users and manufacturers in recent years. The outdoor travelling device using an electrical energy storage apparatus may be provided with communication apparatuses such as antennas and Bluetooth. The user may connect the mobile phone to the outdoor travelling device, facilitating remote control of the user. The communication apparatuses also need to be powered by the electrical energy storage apparatus. When the electrical energy storage apparatus does not have a sufficient electric quantity, the communication apparatuses cannot communicate.

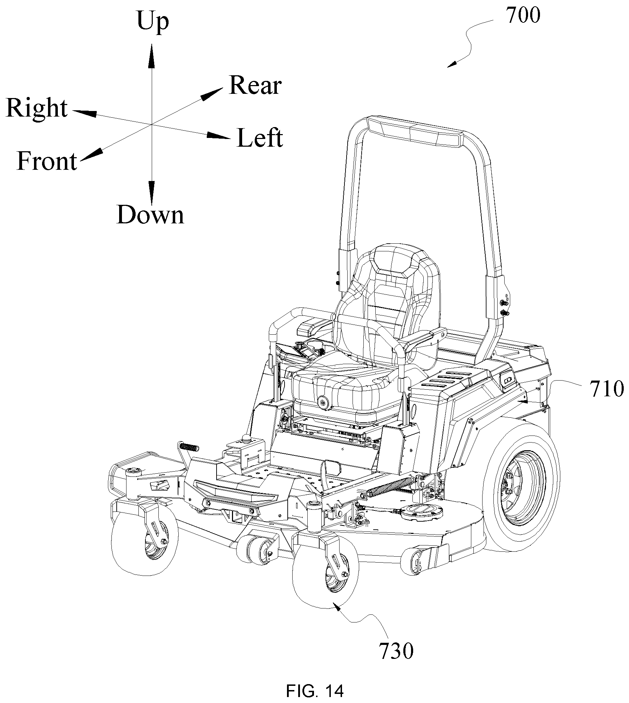

As shown in FIG. 14, the outdoor travelling device disclosed in the present application may specifically be an electric wheeled device 700 such as a manned mower. The user can ride or stand on the electric wheeled device 700 to operate the electric wheeled device 700 to trim lawns and other vegetation. In this specification, front, rear, left, right, up, and down are described as directions shown in FIG. 14. Specifically, when the user rides on the outdoor travelling device 700 on the ground, it is defined that the direction which the user faces is front, the direction which the user faces away from is rear, the direction on the left-hand side of the user is left, the direction on the right-hand side of the user is right, the direction toward the ground is down, and the direction away from the ground is up. Of course, the outdoor travelling device disclosed in the present application further includes a utility vehicle (UTV). In the related art, the UTV includes a four-wheel all-terrain vehicle (ATV), a multi-purpose ATV, and a go-kart. In addition, the outdoor travelling device disclosed in the present application further includes a manned snow thrower, a push mower, a push snow thrower, an electric motorcycle, and the like.

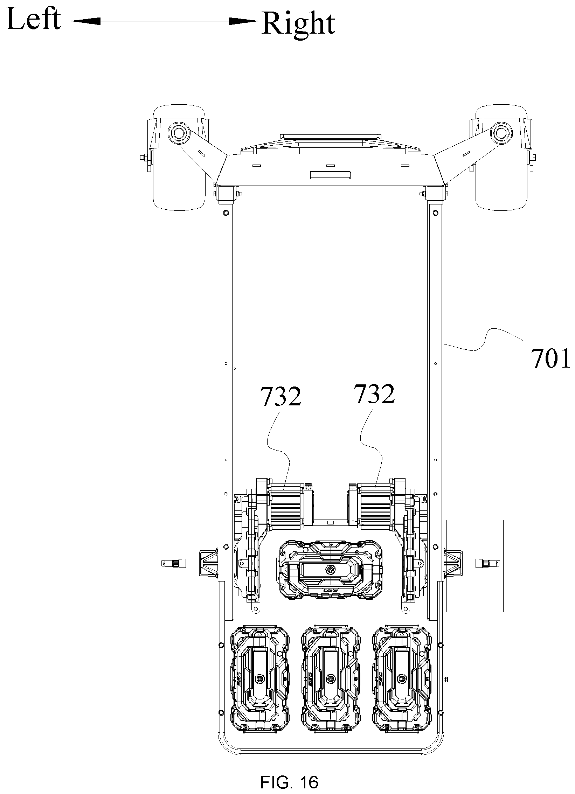

As shown in FIGS. 14 to 16, the electric wheeled device 700 includes a housing assembly 710, a power supply assembly 720, a travelling assembly 730, and a chassis 701. The travelling assembly 730 includes a travelling wheel assembly 731 and travelling electric motors 732. The travelling wheel component 731 is mounted to the chassis 701 to connect and support the chassis 701. Each of the travelling electric motors 732 has a drive shaft and is configured to drive the travelling wheel assembly 731 to rotate. The power supply assembly 720 is configured to power the outdoor travelling device 700 and is configured to power at least the travelling electric motors 732.

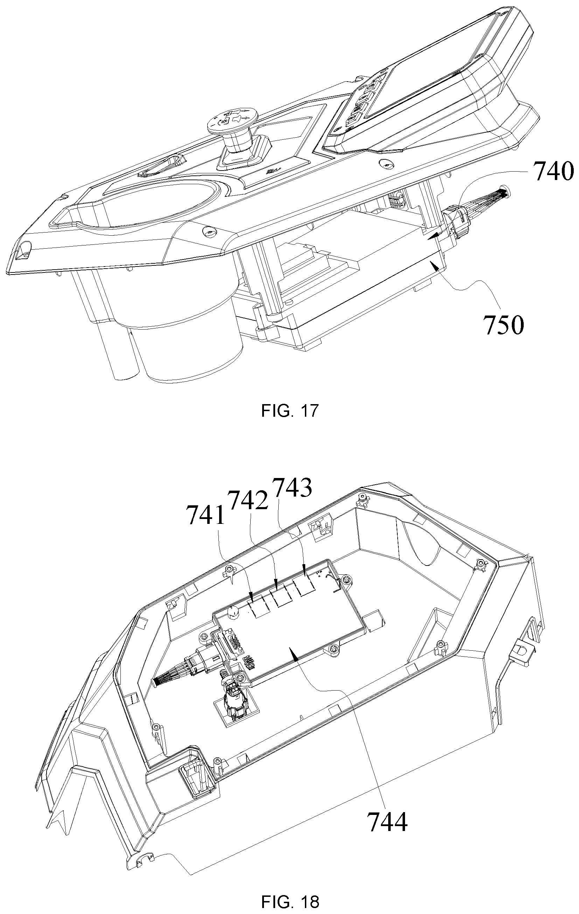

As shown in FIG. 17, the electric wheeled device 700 further includes a wireless communication module 740 and an energy storage assembly 750. The wireless communication module 740 is configured to communicate with an external device. The wireless communication module 740 is configured to be capable of performing bidirectional communication with the external device, transmit data and information to the external device, and receive input information from the external device. The energy storage assembly 750 is configured to power the wireless communication module 740.

In some examples, the wireless communication module 740 includes a positioning module 741. The positioning module 741 is configured to acquire a real-time position of the electric wheeled device 700, record a travelling trajectory of the electric wheeled device 700, and like. Optionally, the positioning module 741 may be a Global Positioning System (GPS) positioning module. Optionally, the positioning module 741 may be a BeiDou positioning module. Optionally, the positioning module 741 may be a WiFi access point (WiFi AP) positioning module.

In some examples, the wireless communication module 740 includes a Bluetooth module 742. The Bluetooth module 742 is configured to scan an external device around the electric wheeled device 700 and connect the electric wheeled device 700 to the external device. In some examples, the wireless communication module 740 includes a 4G module 743 configured to send state information of the electric wheeled device 700 to the external device. After being connected to the external device through the Bluetooth module 742, the 4G module 743 sends the external device information of the electric wheeled device 700 acquired by the positioning module 741, and the 4G module 743 sends other information of the electric wheeled device 700 to the external device. The sent information is not limited in the present application. Additionally, the electric wheeled device 700 may also receive information from the external device based on the 4G module 743. The received information is not limited in the present application. Optionally, the positioning module 741, the Bluetooth module 742, and the 4G module 743 may be mounted together and used as a whole. Optionally, the positioning module 741, the Bluetooth module 742, and the 4G module 743 may be independent modules mounted on the electric wheeled device 700 separately. The positioning module 741, the Bluetooth module 742, and the 4G module 743 may be connected to other modules through a bus and perform information interaction with the modules on the bus.

In some examples, as shown in FIG. 18, the positioning module 741, the Bluetooth module 742, and the 4G module 743 are all mounted on a communication circuit board 744 and used as a whole. That is, the wireless communication module 740 is mounted on the communication circuit board 744. To allow the energy storage assembly 750 to power the wireless communication module 740 conveniently, the wireless communication module 740 may be disposed on a first surface of the communication circuit board 744, and the energy storage assembly 750 may be disposed on a second surface of the communication circuit board 744. To prevent water from penetrating into the wireless communication module 740, the communication circuit board 744, and the energy storage assembly 750, the wireless communication module 740, the communication circuit board 744, and the energy storage assembly 750 may be sealed. For example, adhesive may be used for sealing.

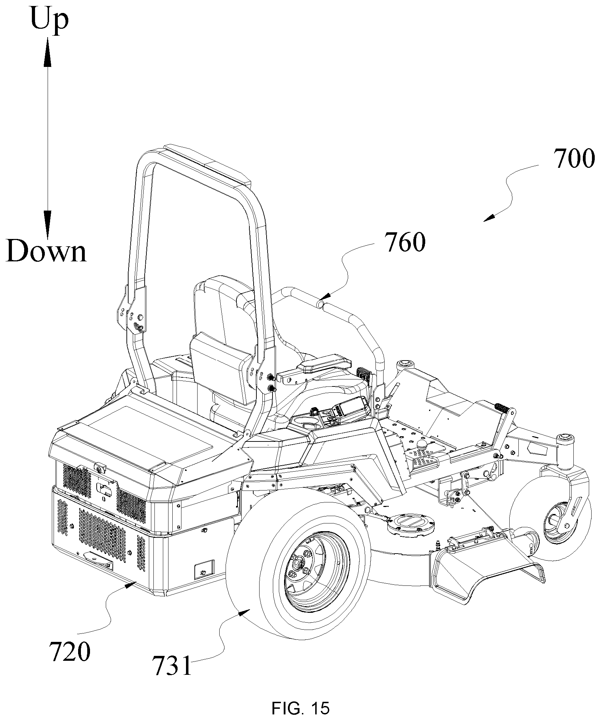

The electric wheeled device 700 includes a predetermined accommodating space. The predetermined accommodating space includes a cover. The wireless communication module 740 may be fixedly mounted below the cover of the predetermined accommodating space. That is, the wireless communication module 740 may be mounted in the predetermined accommodating space. Optionally, as shown in FIG. 15, the electric wheeled device 700 includes an operation assembly 760, and the wireless communication module 740 may be mounted below the cover of the operation assembly 760. Additionally, the wireless communication module 740 may be mounted below the cover of another assembly. The specific position of the predetermined accommodating space is not limited in the present application.

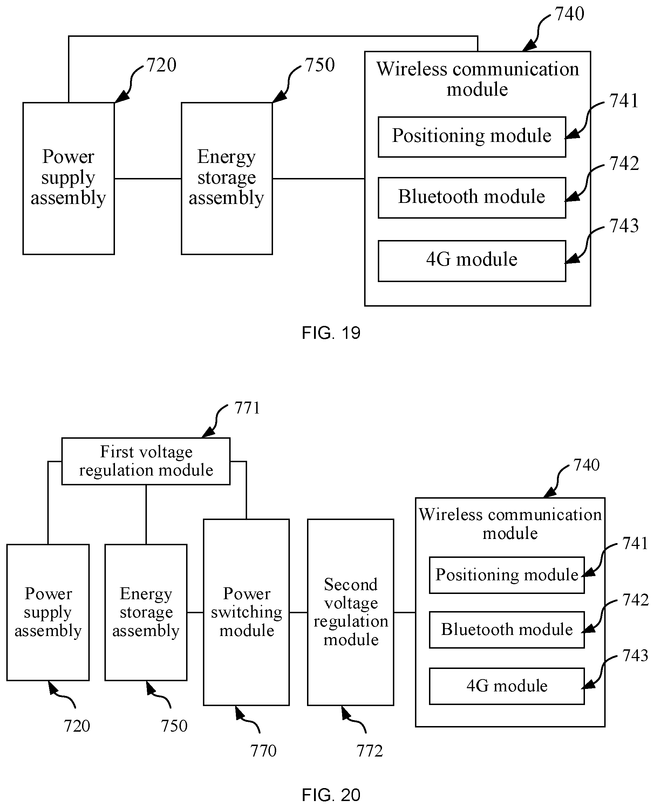

As shown in FIG. 19, the power supply assembly 720 is connected to the energy storage assembly 750 and the wireless communication module 740. When the electric wheeled device 700 is in the on state, the power supply assembly 720 is in a working state and charges the energy storage assembly 750. At the same time, the power supply assembly 720 powers the wireless communication module 740 to allow the wireless communication module 740 to work normally. As shown in FIG. 19, the energy storage assembly 750 is connected to the wireless communication module 740. When the electric wheeled device 700 is in the off state, the electric wheeled device 700 is in a non-working state. That is, when the electric wheeled device 700 is not used, the energy storage assembly 750 powers the wireless communication module 740. Since the power supply assembly 720 is configured to power the electric wheeled device 700, the power capacity of the power supply assembly 720 is much larger than the power capacity of the energy storage assembly 750. Thus, when the electric wheeled device 700 is powered on, the wireless communication module 740 is continuously powered by the power supply assembly 720 to be capable of running stably. In addition, the energy storage assembly 750 can be fully charged by the power supply assembly 720. Thus, when the electric wheeled device 700 is powered off, the energy storage assembly 750 has a sufficient electric quantity to power the wireless communication module 740. Thus, the wireless communication module 740 can run more stably, and the probability is reduced that the energy storage assembly 750 or the power supply assembly 720 cannot power the wireless communication module 740 due to an insufficient electric quantity, thereby allowing the electric wheeled device 700 to communicate more stably. Optionally, the energy storage assembly 750 may be a battery pack. Optionally, the energy storage assembly 750 may be a rechargeable pouch cell. Optionally, the energy storage assembly 750 may be a full-tab battery. Optionally, the energy storage assembly 750 may be a battery pack including a C port. The nominal voltage of the energy storage assembly 750 may be 4V, 8V, or another voltage value and is not limited in the present application.

As shown in FIG. 20, the electric wheeled device 700 also includes a power switching module 770. One end of the power switching module 770 is connected to the power supply assembly 720 and the energy storage assembly 750, and the other end of the power switching module 770 is connected to the wireless communication module 740. When the electric wheeled device 700 is in the on state, the power switching module 770 controls the power supply assembly 720 to power the wireless communication module 740. That is, in this case, the power switching module 770 controls a connecting loop to the power supply assembly 720 to be connected and a connecting loop to the energy storage assembly 750 to be disconnected. When the electric wheeled device 700 is in the off state, the power switching module 770 controls the energy storage assembly 750 to power the wireless communication module 740. That is, in this case, the power switching module 770 controls the connecting loop to the power supply assembly 720 to be disconnected and the connecting loop to the energy storage assembly 750 to be connected.

As shown in FIG. 20, the electric wheeled device 700 further includes a first voltage regulation module 771. A first end of the first voltage regulation module 771 is connected to the power supply assembly 720, and a second end of the first voltage regulation module 771 is connected to the energy storage assembly 750 and the power switching module 770. Since the voltage of the power supply assembly 720 is much higher than the charging voltage of the energy storage assembly 750 and the input voltage of the power switching module 770, the first voltage regulation module 771 is required to decrease the voltages inputted into the energy storage assembly 750 and the power switching module 770. For example, when the output voltage of the power supply assembly 720 is 15 V, the first voltage regulation module 771 may decrease the voltage to 5 V. Optionally, the first voltage regulation module 771 may be a direct current-direct current (DC-DC) voltage regulation module. As shown in FIG. 20, the electric wheeled device 700 further includes a second voltage regulation module 772. A first end of the second voltage regulation module 772 is connected to the power switching module 770, and a second end of the second voltage regulation module 772 is connected to the wireless communication module 740. Since the output voltage of the power switching module 770 is higher than the required voltage of the wireless communication module 740, the second voltage regulation module 772 is required to decrease the voltage inputted into the wireless communication module 740. The voltage inputted into the wireless communication module 740 is determined according to the voltages of the positioning module 741, the Bluetooth module 742, and the 4G module 743 collectively. The voltages required by the positioning module 741, the Bluetooth module 742, and the 4G module 743 are different, and the voltage inputted into the wireless communication module 740 is determined according to the intersection set of the voltages required by the three. For example, the voltage range required by the positioning module 741 is 3 V to 3.6 V, the voltage range required by the Bluetooth module 742 is 3 V to 3.6 V, and the voltage range required by the 4G module 743 is 3.4 V to 4.3 V. The voltage may be decreased to 3.4 V, 3.5 V, or 3.6 V by the second voltage regulation module 772. Optionally, the second voltage regulation module 772 may be a buck-boost module.

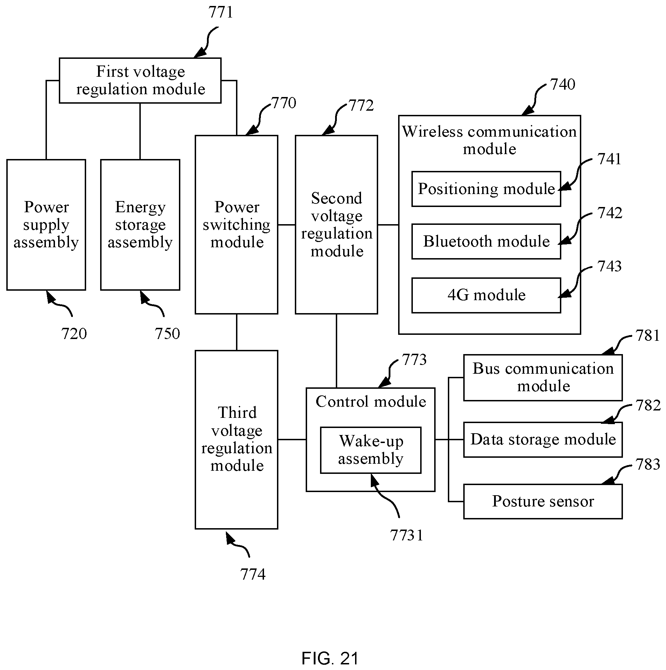

As shown in FIG. 21, the electric wheeled device 700 includes a control module 773 connected to the wireless communication module 740. Optionally, the control module 773 may be an MCU module. The control module 773 includes a wake-up assembly 7731. When the electric wheeled device 700 is in the off state, the wake-up assembly 7731 wakes up the wireless communication module 740 so that the wireless communication module 740 can transmit information to the external device. For example, the wireless communication module 740 can transmit the position of the electric wheeled device 700 to the external device. The control module 773 is also connected to the power switching module 770. The control module 773 is the same as the wireless communication module 740. When the electric wheeled device 700 is in the on state, the control module 773 is powered by the power supply assembly 720. When the electric wheeled device 700 is in the off state, the control module 773 is powered by the energy storage assembly 750. Since the input voltage of the control module 773 does not match the output voltage of the power switching module 770, a third voltage regulation module 774 is disposed between the control module 773 and the power switching module 770. The third voltage regulation module 774 is configured to increase or decrease the voltage outputted by the power switching module 770 to a voltage suitable for the control module 773. Optionally, the third voltage regulation module 774 may be a low dropout (LDO) module. A voltage regulation module is also disposed between the control module 773 and the wireless communication module 740. That is, the control module 773 may be connected to the wireless communication module 740 through the second voltage regulation module 772 so that the output voltage of the control module 773 can be used by the wireless communication module 740.

As shown in FIG. 21, the electric wheeled device 700 may further include a bus communication module 781, a data storage module 782, and a posture sensor 783. The bus communication module 781, the data storage module 782, and the posture sensor 783 are all connected to the control module 773. The posture sensor 783 may be configured to acquire a posture of the electric wheeled device 700, such as whether the electric wheeled device 700 overturns. The bus communication module 781 may be configured to facilitate the communication between multiple modules, such as the communication between the posture sensor 783 and the wireless communication module 740 or the communication between the data storage module 782 and the wireless communication module 740. The data storage module 782 may be configured to store data of the electric wheeled device 700, for example, data of the wireless communication module 740 or data of the posture sensor 783.

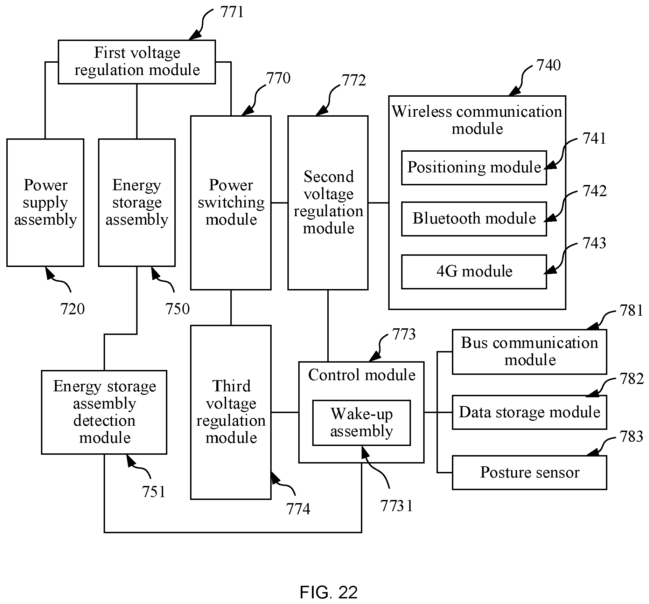

As shown in FIG. 22, the electric wheeled device 700 may further include an energy storage assembly detection module 751. The energy storage assembly detection module 751 is configured to detect whether the state of the energy storage assembly 750 is normal. Optionally, when the electric wheeled device 700 is in the off state, the energy storage assembly detection module 751 may detect whether the output voltage of the energy storage assembly 750 is normal to determine whether the state of the energy storage assembly 750 is normal. One end of the energy storage assembly detection module 751 is connected to the energy storage assembly 750, and the other end of the energy storage assembly detection module 751 is connected to the control module 773. The wake-up assembly 7731 in the control module 773 wakes up the energy storage assembly detection module 751 at intervals to allow the energy storage assembly detection module 751 to detect the energy storage assembly 750. The wake-up assembly 7731 may wake up the energy storage assembly detection module 751 at regular or irregular intervals, which is not limited in the present application. The energy storage assembly detection module 751 is waked up at intervals so that the energy storage assembly detection module 751 is prevented from being in a working state all the time and consuming a lot of electricity.

The basic principles, main features, and advantages of the present application are shown and described above. It is to be understood by those skilled in the art that the preceding examples do not limit the present application in any form, and all technical solutions obtained through equivalent substitutions or equivalent transformations fall within the scope of the present application.

## Claims

1. A charging system, comprising:
an electrical energy conversion apparatus and a plurality of electrical energy receiving apparatuses connected in cascade, wherein the charging system is configured to charge a battery pack electrically connected to an electrical energy receiving apparatus among the plurality of electrical energy receiving apparatuses; and
a communication module, wherein the charging system is configured to establish a communication connection and perform data interaction with an external device through the communication module;
wherein the communication module comprises one or more communication submodules, a communication submodule among the one or more communication submodules is configured to broadcast out broadcast information carrying a data-to-be-transmitted identifier, and the external device or another communication submodule is configured to, after scanning the broadcast information, actively establish a communication connection with the communication submodule broadcasting out, so as to acquire to-be-transmitted data of the communication submodule.

2. The charging system according to claim 1, wherein the electrical energy conversion apparatus comprises a power interface connecting an external power supply, a connecting port connecting the electrical energy receiving apparatus, and a conversion circuit connected between the power interface and the connecting port, and the electrical energy receiving apparatus comprises an electrical energy input port connecting the electrical energy conversion apparatus or another electrical energy receiving apparatus or comprises the electrical energy input port and an electrical energy output port connecting another energy receiving apparatus.

3. The charging system according to claim 1, wherein the communication submodule comprises a Bluetooth submodule as a data sender and/or a Bluetooth gateway submodule as a data receiver.

4. The charging system according to claim 3, wherein the electrical energy conversion apparatus comprises a charger, and the communication module comprises a Bluetooth gateway submodule disposed in the charger.

5. The charging system according to claim 3, wherein the electrical energy receiving apparatus comprises an adapter, and the communication module comprises a Bluetooth submodule disposed in the adapter.

6. The charging system according to claim 3, wherein the communication module comprises a Bluetooth submodule disposed in the battery pack.

7. The charging system according to claim 3, wherein the Bluetooth gateway submodule is configured to periodically listen for and scan a broadcast message with a preset frequency.

8. The charging system according to claim 3, wherein the communication submodule further comprises a wireless fidelity (Wi-Fi) submodule or a cellular submodule, and the charging system is configured to perform the data interaction with the external device through the Wi-Fi submodule or the cellular submodule.

9. The charging system according to claim 8, wherein the external device comprises a cloud server.

10. The charging system according to claim 8, wherein the charging system is configured to adjust a frequency of the data interaction with the external device based on a working state of at least one of the electrical energy conversion apparatus, the electrical energy receiving apparatus, and the battery pack.

11. The charging system according to claim 1, wherein the communication module forms a wireless communication link in the charging system and/or between the charging system and the external device, the communication module comprises a storage unit, data untransmitted at present is retained in the storage unit when the wireless communication link is interrupted, and the communication module is configured to, after the wireless communication link is restored, continue the data transmission uncompleted before the link interruption.

12. The charging system according to claim 1, wherein the communication module forms a wired communication link and a wireless communication link in the charging system and/or between the charging system and the external device, and the communication module is configured to perform data transmission through the wired communication link and the wireless communication link simultaneously.

13. The charging system according to claim 12, wherein the electrical energy conversion apparatus is configured to receive control data from the external device through the wireless communication link and transmit the control data to the electrical energy receiving apparatus and/or the battery pack through the wired communication link.

14. The charging system according to claim 1, wherein the communication submodule as a data sender has a broadcast state and a connected state, the communication submodule broadcasts out, in the broadcast state, the broadcast information carrying the data-to-be-transmitted identifier and performs data transmission in the connected state, and the external device or the another communication submodule as a data receiver actively establishes the communication connection with the communication submodule in the broadcast state after scanning the broadcast information so that the communication submodule enters the connected state.

15. The charging system according to claim 13, wherein the communication submodule as a data sender is configured to return to a broadcast state after transmission of the to-be-transmitted data is completed in a connected state or after a duration for which no response is received from a data receiver in a connected state exceeds a preset duration threshold.

16. A charging system, comprising:
an electrical energy conversion apparatus and a plurality of electrical energy receiving apparatuses connected in cascade, wherein the charging system is configured to charge battery packs electrically connected to the plurality of electrical energy receiving apparatuses; and
a communication module, wherein the charging system is configured to establish a communication connection and perform data interaction with an external device through the communication module;
wherein the communication module comprises one or more communication submodules, a communication submodule among the one or more communication submodules as a data sender has a broadcast state and a connected state, the communication submodule broadcasts out, in the broadcast state, broadcast information carrying a data-to-be-transmitted identifier and performs data transmission in the connected state, and the external device or another communication submodule as a data receiver actively establishes a communication connection with the communication submodule in the broadcast state after scanning the broadcast information so that the communication submodule enters the connected state.

17. The charging system according to claim 16, wherein the communication submodule as the data sender is configured to return to the broadcast state after the transmission of to-be-transmitted data is completed in the connected state or after a duration for which no response is received from the data receiver in the connected state exceeds a preset duration threshold.

18. The charging system according to claim 16, wherein the communication module comprises a bus and Bluetooth submodules disposed in at least part of the battery packs, and battery pack data is transmitted simultaneously through a bus-based wired communication link and a wireless communication link based on the Bluetooth submodules.

19. A battery pack, comprising:
a battery pack housing;
a cell unit accommodated in the battery pack housing;
a terminal assembly configured to be coupled to a power tool or an adapter so as to transmit electrical energy; and
a communication module configured to establish a communication connection and perform data interaction with an external device;
wherein the communication module is further configured to broadcast out broadcast information carrying a data-to-be-transmitted identifier so that the external device actively establishes the communication connection and performs the data interaction with the communication module after scanning the broadcast information.

20. The battery pack according to claim 19, wherein the power tool comprises a handheld power tool and a riding vehicle.

21. A charging system, comprising:
an electrical energy conversion apparatus and a plurality of electrical energy receiving apparatuses connected in cascade, wherein the charging system is configured to charge a battery pack electrically connected to an electrical energy receiving apparatus among the plurality of electrical energy receiving apparatuses; and
a communication module, wherein the charging system is configured to establish a communication connection and perform data interaction with an external device through the communication module;
wherein the charging system is further configured to adjust a frequency of the data interaction with the external device based on a working state of at least one of the electrical energy conversion apparatus, the electrical energy receiving apparatus, and the battery pack.

22. The charging system according to claim 21, wherein the electrical energy conversion apparatus comprises a power interface connecting an external power supply, a connecting port connecting the electrical energy receiving apparatus, and a conversion circuit connected between the power interface and the connecting port, and the electrical energy receiving apparatus comprises an electrical energy input port connecting the electrical energy conversion apparatus or another electrical energy receiving apparatus or comprises the electrical energy input port and an electrical energy output port connecting another energy receiving apparatus.

23. The charging system according to claim 21, wherein the charging system is configured to adjust the frequency of the data interaction based on an idle duration for which the electrical energy conversion apparatus continuously remains in an idle state.

24. The charging system according to claim 21, wherein the working state comprises an emergency, and the charging system is configured to perform the data interaction with the external device when the emergency occurs, wherein the emergency comprises an event where the battery pack is inserted or removed and/or a fault alarm.

25. The charging system according to claim 23 or 24, wherein the charging system is further configured to adjust the frequency of the data interaction with the external device based on an instruction from the external device.

26. The charging system according to claim 21, wherein the communication module comprises a storage unit, and the communication module is configured to, when communication with the external device is interrupted, store fault information in the storage unit and is configured to, after the communication is restored, transmit the fault information to the external device.

27. The charging system according to claim 21, wherein the communication module forms a wired communication link and a wireless communication link in the charging system and/or between the charging system and the external device, and the communication module is configured to perform data transmission through the wired communication link and the wireless communication link simultaneously.

28. The charging system according to claim 21, wherein the communication module comprises one or more of a Bluetooth submodule, a Bluetooth gateway submodule, a wireless fidelity (Wi-Fi) submodule, and a cellular submodule, and the charging system is configured to perform the data interaction with the external device through the Wi-Fi submodule or the cellular submodule.

29. The charging system according to claim 28, wherein the electrical energy conversion apparatus comprises a charger, and the communication module comprises a Bluetooth gateway submodule disposed in the charger.

30. The charging system according to claim 29, wherein the electrical energy receiving apparatus comprises an adapter, and the communication module comprises a Bluetooth submodule disposed in the adapter.

31. A charging combination, comprising an adapter and a battery pack electrically connected to the adapter detachably;
wherein the adapter comprises:
an adapter housing;
an electrical energy input port configured to access electrical energy to charge the battery pack; and
at least one coupling portion for electrically connecting the battery pack detachably;
wherein the charging combination further comprises a communication module, the charging combination is configured to establish a communication connection and perform data interaction with an external device through the communication module, and the charging combination is further configured to adjust a frequency of the data interaction with the external device based on a working state of the adapter and/or the battery pack.

32. The charging combination according to claim 31, wherein the communication module comprises a Bluetooth submodule disposed in the battery pack and/or the adapter.

33. The charging combination according to claim 31, wherein the external device is provided with a Bluetooth gateway submodule.

34. A charging system, comprising:
an electrical energy conversion apparatus and a plurality of electrical energy receiving apparatuses connected in cascade, wherein the charging system is configured to charge a battery pack electrically connected to an electrical energy receiving apparatus among the plurality of electrical energy receiving apparatuses; and
a communication module, wherein the charging system is configured to establish a communication connection and perform data interaction with an external device through the communication module;
wherein the communication module forms a wireless communication link in the charging system and/or between the charging system and the external device for transmitting data, the communication module comprises a storage unit, data untransmitted at present is retained in the storage unit when the wireless communication link is interrupted, and the communication module is configured to, after the wireless communication link is restored, continue the data transmission uncompleted before the link interruption.

35. The charging system according to claim 34, wherein the communication module is configured to clear the data in the storage unit after the data transmission is completed.

36. The charging system according to claim 34, wherein the communication module is further configured to, after the wireless communication link is restored, transmit fault information corresponding to the interruption of the wireless communication link.

37. The charging system according to claim 34, wherein the communication module is configured to add, during data transmission, a device identifier of the electrical energy receiving apparatus and/or the electrical energy conversion apparatus passed through to the data.

38. The charging system according to claim 34, wherein the communication module comprises one or more of a Bluetooth submodule, a Bluetooth gateway submodule, a wireless fidelity (Wi-Fi) submodule, and a cellular submodule.

39. The charging system according to claim 38, wherein the communication module is configured to perform the data interaction with the external device through at least one of the Bluetooth submodule, the Wi-Fi submodule, and the cellular submodule.

40. The charging system according to claim 34, wherein the electrical energy conversion apparatus comprises a power interface connecting an external power supply, a connecting port connecting the electrical energy receiving apparatus, and a conversion circuit connected between the power interface and the connecting port, and the electrical energy receiving apparatus comprises an electrical energy input port connecting the electrical energy conversion apparatus or another electrical energy receiving apparatus or comprises the electrical energy input port and an electrical energy output port connecting another energy receiving apparatus.

41. The charging system according to claim 40, wherein the communication module comprises a Bluetooth gateway submodule and a Wi-Fi submodule disposed in the electrical energy conversion apparatus.

42. The charging system according to claim 40, wherein a Bluetooth submodule is disposed in each of at least part of battery packs and/or each of at least part of electrical energy receiving apparatuses in the charging system.

43. The charging system according to claim 34, wherein the communication module is configured to, when the wireless communication link is interrupted, record an offset identifier corresponding to the data untransmitted at present and is configured to, after the wireless communication link is restored, continue the data transmission uncompleted before the link interruption based on the recorded offset identifier.

44. A charging combination, comprising an adapter and a battery pack electrically connected to the adapter detachably;
wherein the adapter comprises:
an adapter housing;
an electrical energy input port configured to access electrical energy to charge the battery pack; and
at least one coupling portion for electrically connecting the battery pack detachably;
wherein the charging combination further comprises a communication module, the charging combination is configured to establish a communication connection and perform data interaction with an external device through the communication module, the communication module forms a wireless communication link between the charging combination and the external device or between the charging combination and an electrical energy conversion apparatus for transmitting data, the communication module comprises a storage unit, data untransmitted at present is retained in the storage unit when the wireless communication link is interrupted, and the communication module is configured to, after the wireless communication link is restored, continue the data transmission uncompleted before the link interruption.

45. A battery pack, comprising:
a battery pack housing;
a cell unit accommodated in the battery pack housing;
a terminal assembly configured to be coupled to a power tool or an adapter so as to transmit electrical energy; and
a communication module configured to establish a communication connection and perform data interaction with an external device;
wherein the communication module forms a wireless communication link between the battery pack and the external device or between the battery pack and a charger for transmitting data, the communication module comprises a storage unit, data untransmitted at present is retained in the storage unit when the wireless communication link is interrupted, and the communication module is configured to, after the wireless communication link is restored, continue the data transmission uncompleted before the link interruption.

46. A charging system, comprising:
an electrical energy conversion apparatus and a plurality of electrical energy receiving apparatuses connected in cascade, wherein the charging system is configured to charge battery packs electrically connected to the plurality of electrical energy receiving apparatuses; and
a communication module, wherein the charging system is configured to establish a communication connection and perform data interaction with an external device through the communication module;
wherein the communication module forms a wireless communication link and a bus-based wired communication link in the charging system and/or between the charging system and the external device, and the communication module is configured to perform data transmission through the wired communication link and the wireless communication link simultaneously.

47. The charging system according to claim 46, wherein the electrical energy conversion apparatus comprises a power interface connecting an external power supply, a connecting port connecting an electrical energy receiving apparatus among the plurality of electrical energy receiving apparatuses, and a conversion circuit connected between the power interface and the connecting port, and the electrical energy receiving apparatus comprises an electrical energy input port connecting the electrical energy conversion apparatus or another electrical energy receiving apparatus or comprises the electrical energy input port and an electrical energy output port connecting another energy receiving apparatus.

48. The charging system according to claim 46, wherein the communication module comprises a Bluetooth submodule and/or a Bluetooth gateway submodule.

49. The charging system according to claim 48, wherein the communication module comprises a bus and Bluetooth submodules disposed in at least part of the battery packs, and battery pack data is transmitted simultaneously through the bus-based wired communication link and the wireless communication link based on the Bluetooth submodules.

50. The charging system according to claim 49, wherein the battery pack data comprises one or more of a discharging duration, an amount of discharged electricity, and charging and discharging times of each of the battery packs within a preset period and a number of cycles, a maximum recoverable capacity, and fault information of each of the battery packs.

51. The charging system according to claim 46, wherein the electrical energy conversion apparatus is configured to receive control data from the external device through the wireless communication link and transmit the control data to the plurality of electrical energy receiving apparatuses and/or the battery packs through the wired communication link.

52. The charging system according to claim 48, wherein the Bluetooth submodule is configured to broadcast out broadcast information carrying a data-to-be-transmitted identifier, and the Bluetooth gateway submodule is configured to, after scanning the broadcast information, actively establish a communication connection with the Bluetooth submodule, so as to acquire to-be-transmitted data of the Bluetooth submodule.

53. The charging system according to claim 48, wherein the communication module further comprises a wireless fidelity (Wi-Fi) submodule or a cellular submodule, and the communication module is configured to perform the data interaction with the external device through the Wi-Fi submodule or the cellular submodule.

54. The charging system according to claim 48, wherein the communication module comprises the wired communication link based on an RS485 bus or a controller area network (CAN) bus.

55. A charging system, comprising:
an electrical energy conversion apparatus and a plurality of electrical energy receiving apparatuses connected in cascade, wherein the charging system is configured to charge a battery pack electrically connected to an electrical energy receiving apparatus among the plurality of electrical energy receiving apparatuses; and
a communication module, wherein the charging system is configured to establish a communication connection and perform data interaction with an external device through the communication module;
wherein the communication module forms a wireless communication link and a bus-based wired communication link in the charging system and/or between the charging system and the external device, the communication module comprises one or more communication submodules, and a communication submodule among the one or more communication submodules as a data sender selectively performs data transmission through one of the wired communication link and the wireless communication link based on a link state of each of two communication links from the communication submodule to the external device or another communication submodule as a data receiver.

56. The charging system according to claim 55, wherein the communication submodule is configured to switch the used wired communication link or the used wireless communication link based on busyness of each of the two communication links.

57. The charging system according to claim 55, wherein the communication submodule is configured to switch the used wired communication link or the used wireless communication link based on signal strength of each of the two communication links.

58. The charging system according to claim 55, wherein the electrical energy conversion apparatus is configured to receive control data from the external device through the wireless communication link and transmit the control data to the electrical energy receiving apparatus and/or the battery pack through the wired communication link.

59. The charging system according to claim 55, wherein the electrical energy conversion apparatus comprises a power interface connecting an external power supply, a connecting port connecting the electrical energy receiving apparatus, and a conversion circuit connected between the power interface and the connecting port, and the electrical energy receiving apparatus comprises an electrical energy input port connecting the electrical energy conversion apparatus or another electrical energy receiving apparatus or comprises the electrical energy input port and an electrical energy output port connecting another energy receiving apparatus.

60. A management system of a charging system, comprising:
the charging system comprising:
at least one electrical energy conversion apparatus and a plurality of electrical energy receiving apparatuses connected in cascade, wherein the charging system is configured to charge a battery pack electrically connected to an electrical energy receiving apparatus among the plurality of electrical energy receiving apparatuses; and
a communication module, wherein the charging system is configured to establish a communication connection and perform data interaction with an external device through the communication module; and
the external device comprising:
a display;
a transceiver configured to receive state data of the charging system from the communication module; and
a processor configured to simultaneously display state data of an electrical energy conversion apparatus of the at least one electrical energy conversion apparatus, state data of the electrical energy receiving apparatus, and state data of the battery pack on a main interface of the display.

61. The management system according to claim 60, wherein the external device is configured to establish a communication connection with one of the at least one electrical energy conversion apparatus and receive the state data of the charging system.

62. The management system according to claim 60, wherein the state data of the electrical energy conversion apparatus comprises one or more of time when the charging system starts working, a duration for which the charging system has worked, and a remaining working duration of the charging system.

63. The management system according to claim 60, wherein the state data of the electrical energy receiving apparatus comprises one or more of a number of lower-level electrical energy receiving apparatuses cascaded to the electrical energy receiving apparatus, a number of battery packs electrically connected to the electrical energy receiving apparatus, time when the electrical energy receiving apparatus starts working, a duration for which the electrical energy receiving apparatus has worked, and a remaining working duration of the electrical energy receiving apparatus.

64. The management system according to claim 60, wherein the state data of the battery pack comprises a number of battery packs in the charging system, a number of battery packs with a Bluetooth function, and a charging state of a battery pack without the Bluetooth function.

65. The management system according to claim 64, wherein the state data of the battery pack further comprises a real-time charging progress of the charging system, and the real-time charging progress comprises a number of battery packs in the charging system that are fully charged at present, a number of battery packs in the charging system that are being charged, and a number of battery packs in the charging system that are to be charged.

66. The management system according to claim 64, wherein the state data of the battery pack further comprises one or more of a real-time state of charge (SoC) of each battery pack, a duration for which each battery pack has been charged, and a remaining charging duration of each battery pack.

67. The management system according to any one of claims 62 to 66, wherein the processor is further configured to display fault information of the charging system simultaneously on the main interface of the display.

68. The management system according to claim 60, wherein the main interface comprises an inventory display region, the inventory display region comprises a function menu for a user to make a selection, and the function menu comprises user information and device information of the charging system.

69. The management system according to claim 60, wherein the electrical energy conversion apparatus comprises a power interface connecting an external power supply, a connecting port connecting the electrical energy receiving apparatus, and a conversion circuit connected between the power interface and the connecting port, and the electrical energy receiving apparatus comprises an electrical energy input port connecting the electrical energy conversion apparatus or another electrical energy receiving apparatus or comprises the electrical energy input port and an electrical energy output port connecting another energy receiving apparatus.

70. The management system according to claim 60, wherein the communication module comprises one or more of a Bluetooth submodule, a Bluetooth gateway submodule, a wireless fidelity (Wi-Fi) submodule, and a cellular submodule.

71. A management system of a charging system, comprising:
the charging system comprising:
at least one electrical energy conversion apparatus and a plurality of electrical energy receiving apparatuses connected in cascade, wherein the charging system is configured to charge a battery pack electrically connected to an electrical energy receiving apparatus among the plurality of electrical energy receiving apparatuses; and
a communication module, wherein the charging system is configured to establish a communication connection and perform data interaction with an external device through the communication module; and
an external device comprising:
a display; and
a transceiver configured to receive state data of the charging system from the communication module;
wherein the display has a main interface, and the main interface comprises a running state display region, a fault information display region, and an inventory display region, wherein at least a running state of an electrical energy conversion apparatus of the at least one electrical energy conversion apparatus and a running state of the battery pack are displayed in the running state display region, and the inventory display region comprises a function menu for a user to make a selection.

72. The management system according to claim 71, wherein the function menu comprises user information and device information of the charging system.

73. The management system according to claim 71, wherein one or more of time when the electrical energy conversion apparatus starts working, a duration for which the electrical energy conversion apparatus has worked, and a remaining working duration of the electrical energy conversion apparatus are displayed in the running state display region.

74. The management system according to claim 71, wherein one or more of a number of battery packs in the charging system, a number of battery packs with a Bluetooth function, a charging state of a battery pack without the Bluetooth function, and a real-time charging progress of the charging system are displayed in the running state display region.

75. An external device, comprising:
a display and a transceiver; and
a processor configured to display state data of a charging system on a main interface of the display;
wherein the external device is configured to perform data interaction with an electrical energy conversion apparatus or a battery pack in the charging system through the transceiver, and the main interface comprises a running state display region, a fault information display region, and an inventory display region, wherein at least a running state of the electrical energy conversion apparatus and a running state of the battery pack are displayed in the running state display region, and the inventory display region comprises a function menu for a user to make a selection.

76. The external device according to claim 75, wherein the external device is configured to transmit corresponding control data to the charging system through the transceiver in response to user input so as to adjust a corresponding parameter of the charging system.

77. The external device according to claim 75, wherein the charging system comprises: at least one electrical energy conversion apparatus and a plurality of electrical energy receiving apparatuses connected in cascade, wherein the charging system is configured to charge a battery pack electrically connected to an electrical energy receiving apparatus among the plurality of electrical energy receiving apparatuses; and a communication module, wherein the charging system is configured to establish a communication connection and perform data interaction with the external device through the communication module.

78. The external device according to claim 75, wherein the function menu comprises user information and device information of the charging system.

79. The external device according to claim 75, wherein one or more of time when the electrical energy conversion apparatus starts working, a duration for which the electrical energy conversion apparatus has worked, and a remaining working duration of the electrical energy conversion apparatus are displayed in the running state display region.

80. The external device according to claim 75, wherein one or more of a number of battery packs in the charging system, a number of battery packs with a Bluetooth function, a charging state of a battery pack without the Bluetooth function, and a real-time charging progress of the charging system are displayed in the running state display region.
